(19) Europäisches Patentamt / European Patent Office / Office européen des brevets

(11) **EP 4 053 667 A1**

(12) **EUROPEAN PATENT APPLICATION**
published in accordance with Art. 153(4) EPC

(43) Date of publication:
**07.09.2022 Bulletin 2022/36**

(21) Application number: **19951205.4**

(22) Date of filing: **01.11.2019**

(51) International Patent Classification (IPC):
**G05D 1/10** (2006.01)

(52) Cooperative Patent Classification (CPC):
**G05D 1/0646; G08G 5/0013; G08G 5/0039; G08G 5/0052; G08G 5/0069; G08G 5/0086**

(86) International application number:
**PCT/CN2019/115158**

(87) International publication number:
**WO 2021/082014 (06.05.2021 Gazette 2021/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Guangzhou Xaircraft Technology Co., Ltd.**
**Guangzhou, Guangdong 510000 (CN)**

(72) Inventor: **ZHENG, Liqiang**
**Guangzhou, Guangdong 510000 (CN)**

(74) Representative: **Murgitroyd & Company**
**Murgitroyd House**
**165-169 Scotland Street**
**Glasgow G5 8PL (GB)**

(54) **ROUTE ALTITUDE ADJUSTMENT METHOD, UNMANNED AERIAL VEHICLE OPERATION METHOD, AND RELATED APPARATUS**

(57) Disclosed are a route altitude adjustment method, an unmanned aerial vehicle operation method, and a related apparatus. The route altitude adjustment method includes: acquiring an operating route and an initial height table corresponding to the operating route are acquired; and then, optimizing the initial height table by using the maximum vertical velocity and the maximum vertical acceleration of an unmanned aerial vehicle in a height direction to obtain a target height table including the plurality of interpolation points and a target height of each of the plurality of interpolation point, so that a vertical velocity for flight between any two adjacent interpolation points is less than the maximum vertical velocity and a vertical acceleration for flight between any three adjacent interpolation points is less than the maximum vertical acceleration, so that the unmanned aerial vehicle may always satisfy a flight performance requirements during flight.

FIG. 1

**Description**

TECHNICAL FIELD

The present application relates to the technical field of plant protection using unmanned aerial vehicles, and in particular to a route altitude adjustment method, an unmanned aerial vehicle operation method, and a related apparatus.

BACKGROUND

At present, when an unmanned aerial vehicle is used for plant protection, an area to be operated is generally surveyed and mapped to obtain a three-dimensional map, a two-dimensional route is then generated by using the three-dimensional map, and height information is added into the two-dimensional route to obtain a three-dimensional route, so that the unmanned aerial vehicle may operate according to the three-dimensional route.

However, in the three-dimensional route obtained by this method, since the height information is based on altitude, the unmanned aerial vehicle may fly up and down due to a terrain, a height of crops or the like. As a result, the unmanned aerial vehicle will shake due to an obvious change in height during flight, so that a flight performance requirement of the unmanned aerial vehicle are not satisfied.

SUMMARY

An objective of the present application is to provide a route altitude adjustment method, an unmanned aerial vehicle operation method, and a related apparatus, in order to solve a problem that height information about a route may not satisfy a flight performance requirement of an unmanned aerial vehicle in the prior art.

In order to achieve the above objective, embodiments of the present application employ the following technical solutions.

In a first aspect, the present application provides a route altitude adjustment method, including steps of: acquiring an operating route and an initial height table corresponding to the operating route, the initial height table including a plurality of interpolation points on the operating route and an interpolation height of each of the plurality of interpolation points; acquiring a maximum vertical velocity and the maximum vertical acceleration of an unmanned aerial vehicle in a height direction; adjusting the interpolation heights of each of the plurality of interpolation points in the initial height table according to the maximum vertical velocity so that a vertical velocity of the unmanned aerial vehicle for flight between any two adjacent interpolation points is less than the maximum vertical velocity, to obtain a reference height table, the reference height table including the plurality of interpolation points and a reference height of each of the plurality of interpolation points; and, adjusting the reference height of each of the plurality of interpolation points in the reference height table according to the maximum vertical acceleration so that a vertical acceleration of the unmanned aerial vehicle for flight between any three adjacent interpolation points is less than the maximum vertical acceleration, to obtain a target height table, the target height table including the plurality of interpolation points and a target height of each of the plurality of interpolation points.

Optionally, the step of adjusting the interpolation heights of the interpolation points in the initial height table according to the maximum vertical velocity so that the vertical velocity of the unmanned aerial vehicle for flight between any two adjacent interpolation points is less than the maximum vertical velocity, to obtain a reference height table includes: acquiring the maximum horizontal velocity of the unmanned aerial vehicle when flying according to the operating route; calculating, according to the maximum horizontal velocity and a preset interpolation distance between two adjacent interpolation points, the flight time of the unmanned aerial vehicle for flying the preset interpolation distance at the maximum horizontal velocity; acquiring a first interpolation height of a first interpolation point in the initial height table and a second interpolation height of a next interpolation point adjacent to the first interpolation point; calculating, according to the flight time, the first interpolation height and the second interpolation height, a vertical velocity at which the unmanned aerial vehicle flies from the first interpolation point to the next interpolation point within the flight time; determining whether the vertical velocity is less than the maximum vertical velocity; increasing the smallest one of the first interpolation height and the second interpolation height if the vertical velocity is greater than or equal to the maximum vertical velocity; determining whether the next interpolation point is the last interpolation point in the initial height table; if the next interpolation point is not the last interpolation point in the initial height table, replacing the first interpolation point with the next interpolation point, and executing the step of acquiring a first interpolation height of a first interpolation point in the initial height table and a second interpolation height of a next interpolation point adjacent to the first interpolation point until the next interpolation point is the last interpolation point in the initial height table; determining whether the vertical velocity of the unmanned aerial vehicle for flight between any two adjacent interpolation points among the plurality of interpolation points after the height adjustment is less than the maximum vertical velocity; and, if the vertical velocity of the unmanned aerial vehicle for flight between any two adjacent interpolation points among the plurality of interpolation points after the height adjustment is greater than or equal to the maximum vertical velocity, executing the step of acquiring a first interpolation height of a first interpolation point in the initial height table and a second interpolation height of a next interpolation point adjacent to the first interpolation point until the vertical velocity of the unmanned aerial vehicle for flight between any two adjacent interpolation points among the plurality of interpolation points after the height adjustment is less than the maximum vertical velocity, to obtain the reference height table.

Optionally, the step of increasing the smallest one of the first interpolation height and the second interpolation height includes: if the first interpolation height is greater than the second interpolation height, adjusting the second interpolation height as $H(n) = H(n\text{-}1)\text{-}v_{max}*t$, where H(n) denotes the second interpolation height, H(n-1) denotes the first interpolation height, $v_{max}$ denotes the maximum vertical velocity, and t denotes the flight time; and, if the first interpolation height is less than the second interpolation height, adjusting the first interpolation height as $H(n\text{-}1) = H(n)\text{-}v_{max}*t$.

Optionally, the step of adjusting the reference heights of the interpolation points in the reference height table according to the maximum vertical acceleration so that the vertical acceleration of the unmanned aerial vehicle for flight between any three adjacent interpolation points is less than the maximum vertical acceleration, to obtain a target height table, the target height table comprising the plurality of interpolation points and a target height of each interpolation point includes: acquiring a second reference height of a second interpolation point in the reference height table, a first reference height of a previous interpolation point adjacent to the second interpolation point, and a third reference height of a next interpolation point adjacent to the second interpolation point; calculating, according to the flight time, the first reference height, the second reference height and the third reference height, a vertical acceleration at which the unmanned aerial vehicle flies from the previous interpolation point to the next interpolation point through the second interpolation point; determining whether the vertical acceleration is less than the maximum vertical acceleration; increasing the smallest one of the first reference height, the second reference height and the third reference height if the vertical acceleration is greater than or equal to the maximum vertical acceleration; determining whether the next interposition point is the last interpolation point in the reference height table; if the next interposition point is not the last interpolation point in the reference height table, replacing the second interpolation point with the next interpolation point and executing the above step until the next interpolation point is the last interpolation point in the reference height table; determining whether the vertical acceleration of the unmanned aerial vehicle for flight between any three adjacent interpolation points among the plurality of interpolation points after the height adjustment is less than the maximum vertical acceleration; and, if the vertical acceleration of the unmanned aerial vehicle for flight between any three adjacent interpolation points among the plurality of interpolation points after the height adjustment is greater than or equal to the maximum vertical acceleration, repeating the above steps until the vertical acceleration of the unmanned aerial vehicle for flight between any three adjacent interpolation points among the plurality of interpolation points after the height adjustment is less than the maximum vertical acceleration, to obtain the target height table.

Optionally, the step of increasing the smallest one of the first reference height, the second reference height and the third reference height includes: if both the first reference height and the third reference height are greater than the second reference height, adjusting the second reference height as

$$H_n = \frac{H_{n+1} + H_{n-1} - a_{max}*t^2}{2}$$

, where $H_n$ denotes the second reference height, $H_{n-1}$ denotes the first reference height, $H_{n+1}$ denotes the third reference height, $a_{max}$ denotes the maximum vertical acceleration, and t denotes the flight time; if the second reference height is greater than the first reference height and the third reference height and the third reference height is greater than the first reference height, adjusting the first reference height as $H_{n-1} = -a_{max}*t^2 + 2H_n - H_{n+1}$; and, if the second reference height is greater than the first reference height and the third reference height and the third reference height is less than the first reference height, adjusting the third reference height as $H_{n+1} = -a_{max}*t^2 + 2H_n - H_{n-1}$.

Optionally, the operating route includes at least one operating route segment, and the method further includes steps of: in response to a route editing instruction, determining a target operating route segment from the at least one operating route segment; and, setting the height of each interpolation point on the target operating route segment to be a preset height, the height being any one of the interpolation height, the reference height and the target height.

Optionally, the method further includes steps of: determining whether any three adjacent interpolation points among the plurality of interpolation points are equal in target height; deleting the intermediate one among the three adjacent interpolation points if any three adjacent interpolation points among the plurality of interpolation points are equal in target height; and, repeating the above steps until any three adjacent interpolation points among the plurality of interpolation points are not equal in target height.

Optionally, the step of acquiring an initial height table corresponding to the operating route includes: determining a plurality of interpolation points on the operating route by equidistant interpolation; inquiring, in a three-dimensional map, a topographical height of the highest point in a circle using the current interpolation point as a center and having a preset radius, and using the topographical height of the highest point as the interpolation height of the current interpolation point; and, traversing each interpolation point to obtain the interpolation height of each interpolation point.

In a second aspect, the present application further provides an unmanned aerial vehicle operation method, including steps of: acquiring an operating route and a target height table corresponding to the operating route, the target height table being obtained by the route altitude adjustment method described above; and, flying according to the operating route and the target height table.

In a third aspect, the present application provides a route altitude adjustment apparatus. a first acquisition module configured to acquire an operating route and an initial height table corresponding to the operating route, the initial height table including a plurality of interpolation points on the operating route and an interpolation height of each of the plurality of interpolation points; the first acquisition module, being further configured to acquire the maximum vertical velocity and the maximum vertical acceleration of an unmanned aerial vehicle in a height direction; a first adjustment module, configured to adjust the interpolation height of each of the plurality of interpolation points in the initial height table according to the maximum vertical velocity so that a vertical velocity of the unmanned aerial vehicle for flight between any two adjacent interpolation points is less than the maximum vertical velocity, to obtain a reference height table, the reference height table including the plurality of interpolation points and a reference height of each of the plurality of interpolation points; and, a second adjustment module, configured to adjust the reference height of each of the plurality of interpolation points in the reference height table according to the maximum vertical acceleration so that a vertical acceleration of the unmanned aerial vehicle for flight between any three adjacent interpolation points is less than the maximum vertical acceleration, to obtain a target height table, the target height table including the plurality of interpolation points and a target height of each of the plurality of interpolation points.

Optionally, the first adjustment module is specifically configured to: acquire the maximum horizontal velocity of the unmanned aerial vehicle when flying according to the operating route; calculate, according to the maximum horizontal velocity and a preset interpolation distance between two adjacent interpolation points, the flight time of the unmanned aerial vehicle for flying the preset interpolation distance at the maximum horizontal velocity; acquire a first interpolation height of a first interpolation point in the initial height table and a second interpolation height of a next interpolation point adjacent to the first interpolation point; calculate, according to the flight time, the first interpolation height and the second interpolation height, a vertical velocity at which the unmanned aerial vehicle flies from the first interpolation point to the next interpolation point within the flight time; determine whether the vertical velocity is less than the maximum vertical velocity; increase the smallest one of the first interpolation height and the second interpolation height if the vertical velocity is greater than or equal to the maximum vertical velocity; determine whether the next interposition point is the last interpolation point in the initial height table; if the next interposition point is not the last interpolation point in the initial height table, replace the first interpolation point with the next interpolation point, and execute the step of acquiring a first interpolation height of a first interpolation point in the initial height table and a second interpolation height of a next interpolation point adjacent to the first interpolation point until the next interposition point is the last interpolation point in the initial height table; determine whether the vertical velocity of the unmanned aerial vehicle for flight between any two adjacent interpolation points among the plurality of interpolation points after the height adjustment is less than the maximum vertical velocity; and, if the vertical velocity of the unmanned aerial vehicle for flight between any two adjacent interpolation points among the plurality of interpolation points after the height adjustment is greater than or equal to the maximum vertical velocity, execute the step of acquiring a first interpolation height of a first interpolation point in the initial height table and a second interpolation height of a next interpolation point adjacent to the first interpolation point until the vertical velocity of the unmanned aerial vehicle for flight between any two adjacent interpolation points among the plurality of interpolation points after the height adjustment is less than the maximum vertical velocity, to obtain the reference height table.

Optionally, the way of increasing, by the first adjustment module, the smallest one of the first interpolation height and the second interpolation height includes: if the first interpolation height is greater than the second interpolation height, adjusting the second interpolation height as $H(n) = H(n\text{-}1)\text{-}v_{max}{}^*t$, where H(n) denotes the second interpolation height, H(n-1) denotes the first interpolation height, $v_{max}$ denotes the maximum vertical velocity, and t denotes the flight time; and, if the first interpolation height is less than the second interpolation height, adjusting the first interpolation height as $H(n\text{-}1) = H(n)\text{-}v_{max}{}^*t$.

Optionally, the second adjustment module is specifically configured to: acquire a second reference height of a second interpolation point in the reference height table, a first reference height of a previous interpolation point adjacent to the second interpolation point, and a third reference height of a next interpolation point adjacent to the second interpolation point; calculate, according to the flight time, the first reference height, the second reference height and the third reference height, a vertical acceleration at which the unmanned aerial vehicle flies from the previous interpolation point to the next interpolation point through the second interpolation point; determine whether the vertical acceleration is less than the maximum vertical acceleration; increase the smallest one of the first reference height, the second reference height and the third reference height if the vertical acceleration is greater than or equal to the maximum vertical acceleration; determine whether the next interposition point is the last interpolation point in the reference height table; if the next interposition point is not the last interpolation point in the reference height table, replace the second interpolation point with the next interpolation point and execute the above step until the next interpolation point is the last interpolation point in the reference height table; determine whether the vertical acceleration of the unmanned aerial vehicle for flight between any three adjacent interpolation points among the plurality of interpolation points after the height adjustment is less than the maximum vertical acceleration; and, if the vertical acceleration of the unmanned aerial vehicle for flight between any three adjacent interpolation points among the plurality of interpolation points after the height adjustment is greater than or equal to the maximum vertical acceleration, repeat the above steps until the vertical acceleration of the unmanned aerial vehicle for flight between any three adjacent interpolation points among the plurality of interpolation points after the height adjustment is less than the maximum vertical acceleration, to obtain the target height table.

Optionally, the step of increasing, by the second adjustment module, the smallest one of the first reference height, the second reference height and the third reference height includes: if both the first reference height and the third reference height are greater than the second reference height, adjusting the second reference height as

$$H_n = \frac{a_{max} * t^2 - H_{n+1} - H_{n-1}}{2}$$

, where $H_n$ denotes the second reference height, $H_{n-1}$ denotes the first reference height, $H_{n+1}$ denotes the third reference height, $a_{max}$ denotes the maximum vertical acceleration, and t denotes the flight time; if the second reference height is greater than the first reference height and the third reference height and the third reference height is greater than the first reference height, adjusting the first reference height as $H_{n-1} = -a_{max}*t^2 + 2H_n - H_{n+1}$; and, if the second reference height is greater than the first reference height and the third reference height and the third reference height is less than the first reference height, adjusting the third reference height as $H_{n+1} = -a_{max}*t^2 + 2H_n - H_{n-1}$.

Optionally, the operating route includes at least one operating route segment, and the apparatus further includes a processing module configured to: in response to a route editing instruction, determine a target operating route segment from the at least one operating route segment; and; and, set the height of each interpolation point on the target operating route segment to be a preset height, the height being any one of the interpolation height, the reference height and the target height.

Optionally, the processing module is further configured to: determine whether any three adjacent interpolation points among the plurality of interpolation points are equal in target height; delete the intermediate one among the three adjacent interpolation points if any three adjacent interpolation points among the plurality of interpolation points are equal in target height; and, repeat the above steps until any three adjacent interpolation points among the plurality of interpolation points are not equal in target height.

Optionally, the way of acquiring, by the first acquisition module, an initial height table corresponding to the operating route includes: determining a plurality of interpolation points on the operating route by equidistant interpolation; inquiring, in a three-dimensional map, a topographical height of the highest point in a circle using the current interpolation point as a center and having a preset radius, and using the topographical height of the highest point as the interpolation height of the current interpolation point; and, traversing each interpolation point to obtain the interpolation height of each interpolation point.

In a fourth aspect, the present application further provides an unmanned aerial vehicle operation apparatus, including: a second acquisition module, configured to acquire an operating route and a target height table corresponding to the operating route, the target height table being obtained by the route altitude adjustment method described above; and, an execution module configured to fly according to the operating route and the target height table.

In a fifth aspect, the present application further provides an electronic device, including: one or more processors; and, a memory configured to store one or more programs. When the one or more programs are executed by the one or more processors, the one or more processors are enabled to implement the route altitude adjustment method described above and/or the unmanned aerial vehicle operation method according to claim 9.

In a sixth aspect, the present application further provides a non-transitory computer-readable storage medium, storing computer programs. When the computer programs are executed by a processor, the processor is enabled to implement the route altitude adjustment method described above and/or the unmanned aerial vehicle operation method according to claim 9.

Compared with the prior art, the present application provides a route altitude adjustment method, an unmanned aerial vehicle operation method, and a related apparatus. Firstly, an operating route and an initial height table corresponding to the operating route are acquired, the initial height table including a plurality of interpolation points on the operating route and an interpolation height of each of the plurality of interpolation points; and then, the initial height table is optimized by using the maximum vertical velocity and the maximum vertical acceleration of an unmanned aerial vehicle in a height direction to obtain a target height table including the plurality of interpolation points and a target height of each of the plurality of interpolation point, so that a vertical velocity for flight between any two adjacent interpolation points is less than the maximum vertical velocity and a vertical acceleration for flight between any three adjacent interpolation points is less than the maximum vertical acceleration, when the unmanned aerial vehicle flies according to the operating route and the target height table. In other words, the unmanned aerial vehicle may always satisfy a flight performance requirements during flight.

In order to make the objectives, features and advantages of the present application more apparent and comprehensible, detailed description will be given below by preferred embodiments with reference to the accompanying drawings.

BRIEF DESCRIPTION OF DRAWINGS

In order to describe the solutions in the embodiments of the present application more clearly, the technical schemes in the embodiments of the present disclosure will be described clearly and completely below in combination with the accompanying drawings in the embodiments of the present disclosure. Obviously, the described embodiments are only a part of the embodiments of the present disclosure, not all of the embodiments. Based on the embodiments in the present disclosure, all other embodiments obtained by those skilled in the art without creative efforts shall fall within the protection scope of the present disclosure.

FIG. 1 shows a schematic flowchart diagram of a route altitude adjustment method according to an embodiment of the present application

FIG. 2 shows an example diagram of an operating route and interpolation points according to an embodiment of the present application

FIG. 3 shows an example diagram of heights of interpolation points according to an embodiment of the present application

FIG. 4 is a schematic flowchart diagram of Step S103 in the route altitude adjustment method shown in FIG. 1.

FIG. 5 is a schematic flowchart diagram of Step S104 in the route altitude adjustment method shown in FIG. 1.

FIG. 6 shows another schematic flowchart diagram of the route altitude adjustment method according to an embodiment of the present application

FIG. 7 shows another schematic flowchart diagram of the route altitude adjustment method according to an embodiment of the present application

FIG. 8 shows a schematic flowchart diagram of an unmanned aerial vehicle operation method according to an embodiment of the present application

FIG. 9 shows a schematic block diagram of a route altitude adjustment apparatus according to an embodiment of the present application

FIG. 10 shows a schematic block diagram of an unmanned aerial vehicle operation apparatus according to an embodiment of the present application

FIG. 11 shows a schematic block diagram of an electronic device according to an embodiment of the present application

Reference numerals: 10: electronic device; 11: processor; 12: memory; 13: bus; 100: route altitude adjustment apparatus; 101: first acquisition module; 102: first adjustment module; 103: second adjustment module; 104: processing module; 200: unmanned aerial vehicle operation apparatus; 201: second acquisition module; 202: execution module.

DETAILED DESCRIPTION OF THE EMBODIMENTS

The technical schemes in the embodiments of the present application will be described clearly and completely below in combination with the accompanying drawings in the embodiments of the present disclosure. Obviously, the described embodiments are only a part of the embodiments of the present disclosure, not all of the embodiments. Generally, the components of the embodiments of the present application described and shown in the accompanying drawings may be arranged and designed in various different configurations.

Therefore, the following detailed description of the embodiments of the present application with reference to the accompanying drawings is not intended to limit the protection scope of the present application and merely shows the selected embodiments of the present application. All other embodiments obtained on the basis of the embodiments in the present application by those skilled in the art without paying any creative effort shall fall into the protection scope of the present application.

It is to be noted that, similar reference numerals and letters indicate similar items in the following drawings. Therefore, once a certain item is defined in one drawing, it is unnecessary to further define and explain this item in the subsequent drawings. Meanwhile, in the description of the present application, the terms "first", "second" and the like are only used for distinguishing description, and are not interpreted as indicating or implying relative importance.

In the field of plant protection using unmanned aerial vehicles, conventional operation modes include fixed-altitude flight and land imitated flight. The fixed-altitude flight means flying along a set altitude, and the land imitated flight means flying according to a set distance to the land. Generally, the fixed-altitude flight is only applied to some environments with little topographic relief, such as rice fields and plains; while the land imitated flight is applicable to environments with topographic relief, such as hills and terraced fields. However, both the fixed-altitude flight and the land imitated flight require that crops on the land are not too high and the land relief is not too large. For some economic forests where a height of plants is generally several meters or even tens of meters, both the fixed-altitude flight and the land imitated flight are not applicable.

On this basis, at present, when an unmanned aerial vehicle is used for plant protection, a two-dimensional route is firstly planned for an area to be operated, and height information is then added into the two-dimensional route on the basis of the three-dimensional map of the area to be operated. Since the height information is based on the altitude of the highest point in a unit area, the obtained height information may be large and small due to the terrain, the height of crops or the like. If a change in height is very obvious, that is, if a difference between a previous height and a next height is very large, the unmanned aerial vehicle will shake during flight, so that a flight performance requirement of the unmanned aerial vehicle is not satisfied.

In order to solve this problem, the present application provides a route altitude adjustment method, an unmanned aerial vehicle operation method, and a related apparatus. An initial height table is optimized by using the maximum vertical velocity and the maximum vertical acceleration of an unmanned aerial vehicle in a height direction to obtain a target height table including a plurality of interpolation points and a target height of each of the plurality of interpolation point, so that a vertical velocity for flight between any two adjacent interpolation points is less than the maximum vertical velocity and a vertical acceleration for flight between any three adjacent interpolation points is less than the maximum vertical acceleration, when the unmanned aerial vehicle flies according to the operating route and the target height table. In other words, the unmanned aerial vehicle may always satisfy the flight performance requirements during flight. The detailed description will be given below.

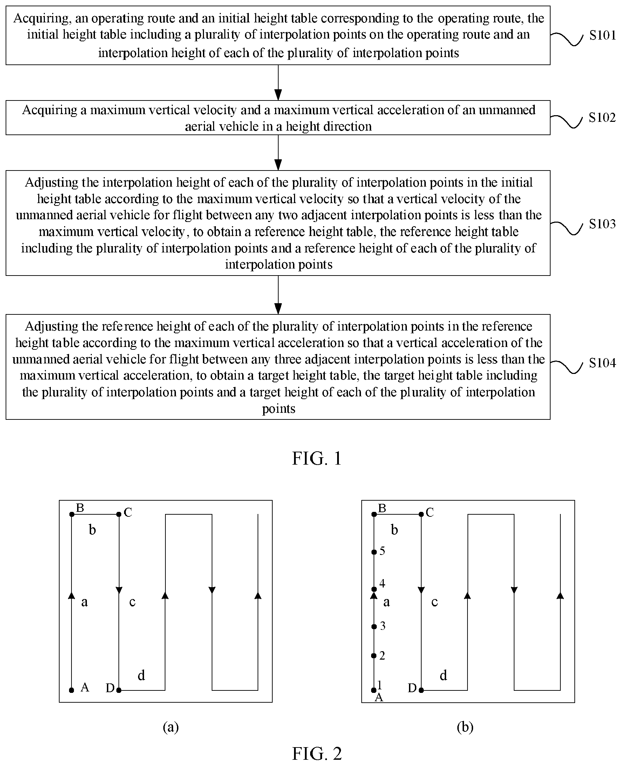

Referring to FIG. 1, FIG. 1 shows a schematic flowchart diagram of a route altitude adjustment method according to an embodiment of the present application. The route altitude adjustment method is applied to electronic devices. The electronic devices may be terminals, servers, ground workstations, unmanned aerial vehicles, etc., and the terminals may be smart phones, tablet computers, portable notebook computers, desktop computers, etc.. The route altitude adjustment method includes the following steps.

Step S101: acquiring, an operating route and an initial height table corresponding to the operating route, the initial height table including a plurality of interpolation points on the operating route and an interpolation height of each of the plurality of interpolation points.

In this embodiment, the operating route may be a two-dimensional route of the unmanned aerial vehicle in a horizontal plane. That is, a height of each point on the two-dimensional route is a height of the horizontal plane. For example, referring to FIG. 2, (a) in FIG. 2 shows one pre-planned two-dimensional route in an area to be operated. The operating route may include at least one operating route segment, and each operating route segment includes a route segment starting waypoint. For example, in FIG. 2, a, b, c and d of (a) represent operating route segments, and A, B, C and D represent route segment starting waypoints of the operating route segments a, b, c and d, respectively. The operating route segments may be flexibly set by a user according to an actual situation.

As an implementation, each operating route segment has a corresponding route segment number, for example, a, b, c and d of (a) in FIG. 2. For one operating route segment, it is only necessary to record a corresponding route segment number and location information of the route segment starting waypoint. For example, information of the operating route segment may be stored by an array waypoint_array, where array elements are structures Waypoint Struct, and a data structure is as follows.

```
Struct PointInfo              // Save the location information of a waypoint
{double x_;
 double y_;
 double z_;} ;
Struct WaypointStruct         // Save the information of the operating route segment
{int waypoint_index_;         // Route segment number
 Point Info point_info_;} ;   // Location information of the route segment starting waypoint
```

In this embodiment, the initial height table corresponding to the operating route includes a plurality of interpolation points on the operating route and an interpolation height of each of the plurality of interpolation point. For the operating route in the area to be operated, interpolation may be performed at certain intervals (e.g., every 1 m) to obtain a plurality of interpolation points. For example, 1, 2, 3 and 4 of (b) in FIG. 2 represent four interpolation points on the operating route 1. Then, a point with the highest altitude in a certain area is searched by using each interpolation point as a center, where this area is generally greater than a size of the unmanned aerial vehicle itself. For example, the size of the unmanned aerial vehicle and a safe distance are used as a search area, and the altitude of the highest point in this search area is used as the interpolation height of this interpolation point. The interpolation height may be acquired by using a three-dimensional map, or a point cloud map, or a contour line and a two-dimensional map, or the like. The following description will be given by taking a three-dimensional map as an example.

The three-dimensional map is obtained by aerially photographing, by a mapping unmanned aerial vehicle, the area to be operated to obtain aerially photographed pictures, then transmitting the aerially photographed pictures to a server/ground workstation and processing the aerially photographed pictures by the server/ground workstation through a three-dimensional reconstruction algorithm. The three-dimensional map may be stored in a form of three-dimensional voxels, or may be stored by recording elevation data of each plane point by using grids. Each point in the three-dimensional map has location information that is three-dimensional coordinates of each point, including longitude, dimensionality, altitude or the like.

As an implementation, the way of acquiring an initial height table corresponding to the operating route may include: determining the plurality of interpolation points in the operating route by an equidistant interpolation, for example, interpolating on the operating route every 1 m; and then, inquiring, in a three-dimensional map, a topographical height of the highest point in a circle using a current interpolation point as a center and having a preset radius (e.g., 1.5 m), and using the topographical height of the highest point as an interpolation height of the current interpolation point. The topographical height of the highest point may be the altitude in the location information of the highest point in the three-dimensional map. For example, as shown in FIG. 2, if the altitude in the location information of the highest point in a circle using the interpolation point 1 of (b) as a center and having a radius of 1.5 m is 50 m, the interpolation height of the interpolation point 1 is 50 m.

The information of the interpolation point may be represented based on the information of the corresponding operating route segment. For example, the information of the interpolation point may be stored by an array interpolation array, where array elements are InterpolationHeight structures, and a data structure is as follows.

```
Struct InterpolationHeight          // Save intermediate height information of the operating route segment
{int waypoint_index_;               // Route segment number
double interval_distance_;          // Distance to the route segment starting waypoint
double interpolation_height_; } ;   // Interpolation height
```

The information of the corresponding operating route segment may be obtained from the array waypoint array according to the route segment number of each array element InterpolationHeight in the array interpolation_array, and coordinates of each interpolation point may be then calculated according to the distance to the route segment starting waypoint.

Step S102: acquiring a maximum vertical velocity and a maximum vertical acceleration of an unmanned aerial vehicle in a height direction.

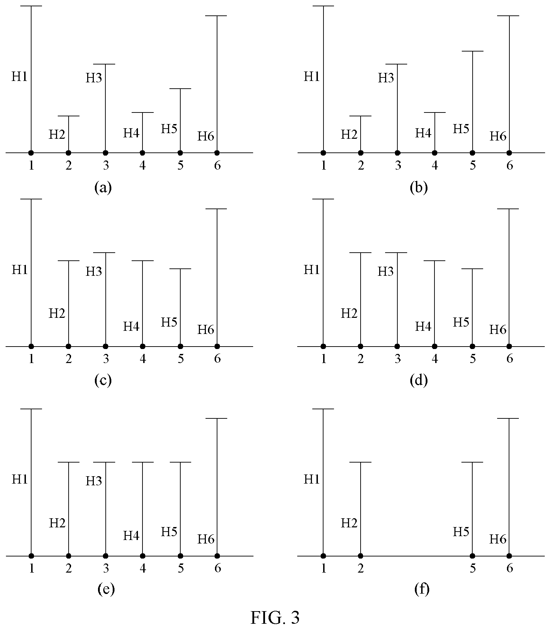

In this embodiment, the initial height table is determined according to the topographical height. For example, (a) in FIG. 3 shows the interpolation height of each interpolation point of (b) in FIG. 2. Apparently, the unmanned aerial vehicle needs to rise or fall frequently when flying according to these interpolation heights. However, the interpolation points on the operating route are obtained by the equidistant interpolation, that is, a horizontal distance between any two adjacent interpolation points is definite (e.g., 1 m). If a difference in the interpolation height between two adjacent interpolation points (e.g., interpolation point 1 and interpolation point 2 of (a) in FIG. 3) is too large, in order to ensure operation efficiency of the unmanned aerial vehicle, the unmanned aerial vehicle is required to rapidly fall from the interpolation height H1 to the interpolation height H2 in a very short time. As a result, it is required that a vertical velocity of the unmanned aerial vehicle is very large, or even greater than the maximum vertical velocity of the unmanned aerial vehicle in the height direction. Correspondingly, a vertical acceleration is also very large, or even greater than the maximum vertical acceleration of the unmanned aerial vehicle in the height direction. It is obvious to not satisfy the flight performance requirements of the unmanned aerial vehicle. Therefore, it is also necessary to optimize the interpolation heights in the initial height table.

In this embodiment, the maximum vertical acceleration and the maximum vertical velocity are related to performance of the unmanned aerial vehicle itself, and are thus preset by an engineer according to the performance of the unmanned aerial vehicle. The maximum vertical acceleration may be a preset fixed value, for example, 1 m/s2. The maximum vertical velocity may be a plurality of preset values and provided to an user in a form of options so that the user selects from the options. For example, three options (i.e., 1 m/s, 1.5 m/s and 2 m/s) are provided to the user. The maximum vertical velocity may be denoted by $v_{max}$, and the maximum vertical acceleration may be denoted by $a_{max}$.

Step S103: adjusting the interpolation height of each of the plurality of interpolation points in the initial height table according to the maximum vertical velocity so that a vertical velocity of the unmanned aerial vehicle for flight between any two adjacent interpolation points is less than the maximum vertical velocity, to obtain a reference height table, the reference height table including the plurality of interpolation points and a reference height of each of the plurality of interpolation points.

In this embodiment, in order to satisfy the flight performance requirements of the unmanned aerial vehicle, it is necessary to ensure that the unmanned aerial vehicle for flight between any two adjacent interpolation points is less than the maximum vertical velocity. Thus, the interpolation heights of the interpolation points in the initial height table may be adjusted based on this principle. Since it is necessary to ensure the operation efficiency of the unmanned aerial vehicle, that is, the unmanned aerial needs to rise/fall from the interpolation height of one interpolation point to the interpolation height of another interpolation point in a very short time, it is only able to decrease a height difference between any two adjacent interpolation points. Meanwhile, during the height adjustment, only smaller heights may be increased, but larger heights may not be decreased. This is because smaller heights may be points on the ground surface or lower crops and will not affect safety of the unmanned aerial vehicle after adjustment. However, larger heights may be the heights of crops (e.g., trees). If larger heights are decreased, the unmanned aerial vehicle may hit against the crops, resulting in dangers.

In this embodiment, if it is assumed that there are N interpolation points in the initial height table, in order to avoid missing some interpolation points during the height adjustment process, the interpolation heights of two adjacent interpolation points in the initial height table may be successively adjusted from a first interpolation point. For example, the first interpolation point and a second interpolation point are adjusted firstly; then, the second interpolation point and a third interpolation point are adjusted; and, by that analogy, until a (N-1)th interpolation point and a Nth interpolation point are adjusted. After a first round of adjustment is completed, if there are still adjacent interpolation points that do not satisfy a condition in terms of height difference, a second round of adjustment will be performed until the height difference between any two adjacent interpolation points may satisfy the condition, that is, the vertical velocity of the unmanned aerial vehicle for flight between any two adjacent interpolation points is less than the maximum vertical velocity. Thus, a reference height table including a plurality of interpolation points and a reference height of each of the plurality of interpolation points is obtained.

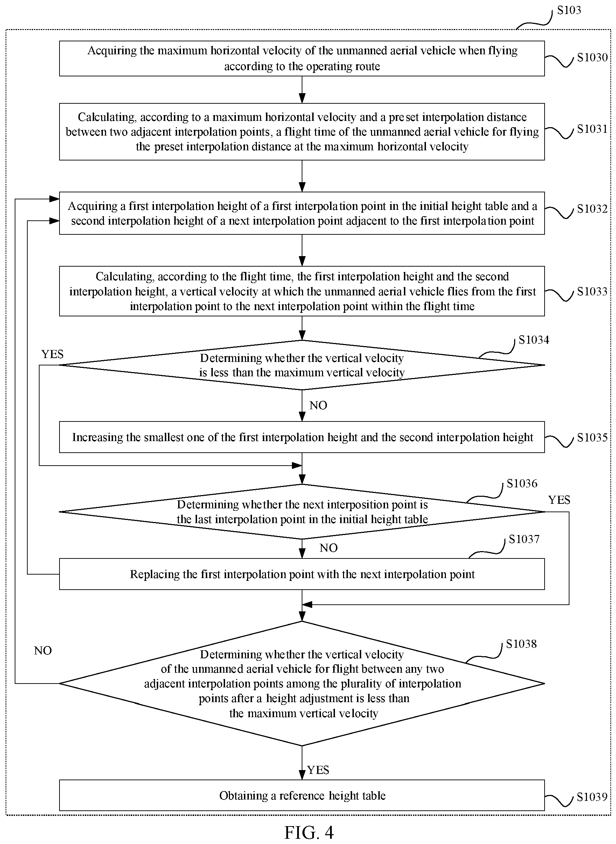

Based on FIG. 1, referring to FIG. 4, Step S103 may include the following steps.

Sub-step S1030: acquiring a maximum horizontal velocity of the unmanned aerial vehicle when flying according to the operating route.

In this embodiment, the maximum horizontal velocity of the unmanned aerial vehicle when flying according to the operating route is a fixed value and related to the performance of the unmanned aerial vehicle itself.

Sub-step S1031: calculating, according to the maximum horizontal velocity and apreset interpolation distance between two adjacent interpolation points, a flight time of the unmanned aerial vehicle for flying the preset interpolation distance at the maximum horizontal velocity.

In this embodiment, the interpolation points on the operating route are obtained by an equidistant interpolation. That is, a distance between any two adjacent interpolation points on the two-dimensional route is the same (e.g., 1 m). The preset interpolation distance is a distance between any two adjacent interpolation points on the two-dimensional route. In a case where the maximum horizontal velocity and the preset interpolation distance are obtained, the flight time of the unmanned aerial vehicle for flying the preset interpolation distance at the maximum horizontal velocity may be calculated. For example, if it is assumed that the preset interpolation distance is 1 m, the flight time is $t = \dfrac{1}{v\_\mathrm{max}}$ , where $v\_max$ is the maximum horizontal velocity.

Sub-step S1032: acquiring a first interpolation height of a first interpolation point in the initial height table and a second interpolation height of a next interpolation point adjacent to the first interpolation point.

Sub-step S1033: calculating, according to the flight time, the first interpolation height and the second interpolation height, a vertical velocity at which the unmanned aerial vehicle flies from the first interpolation point to the next interpolation point within the flight time.

In this embodiment, if it is assumed that the first interpolation height is H(n-1) and the second interpolation height is H(n), the vertical velocity at which the unmanned aerial vehicle flies from the first interpolation point to the next interpolation point within the flight time t is $\dfrac{H(n)-H(n-1)}{t}$ .

Sub-step S1034: determining whether the vertical velocity is less than the maximum vertical velocity.

In this embodiment, if the vertical velocity is greater than or equal to the maximum vertical velocity, Sub-step S1035 will be executed; and, if the vertical velocity is less than the maximum vertical velocity, Sub-step S1036 will be executed. In other words, it is determined whether $\dfrac{H(n)-H(n-1)}{t} < v_\mathrm{max}$ is tenable. If $\dfrac{H(n)-H(n-1)}{t} < v_\mathrm{max}$ is not

tenable, Sub-step S1035 will be executed; and, if $\dfrac{H(n)-H(n-1)}{t} < v_{\max}$ is tenable, Sub-step S1036 will be executed.

Since velocity is a vector, if it is assumed that the vertical upward direction is a positive direction, and when the unmanned aerial vehicle flies from low to high, the maximum vertical velocity is a positive value, it is necessary to determine whether $\dfrac{H(n)-H(n-1)}{t} < v_{\max}$ is tenable; and, when the unmanned aerial vehicle flies from high to low, the maximum vertical velocity is a negative value, and it is necessary to determine whether $\dfrac{H(n)-H(n-1)}{t} > -v_{\max}$ is tenable.

Sub-step S1035: increasing the smallest one of the first interpolation height and the second interpolation height.

In this embodiment, if the vertical velocity is greater than or equal to the maximum vertical velocity, it is indicated that a height difference between the first interpolation height and the second interpolation height is too large, and it is necessary to decrease the height difference between any two adjacent interpolation points. However, in order to ensure safe flight of the unmanned aerial vehicle, the smallest one of the first interpolation height and the second interpolation height may be increased.

As an implementation, the way of increasing the smallest one of the first interpolation height and the second interpolation height may include the following steps.

If the first interpolation height is greater than the second interpolation height, it is indicated that the unmanned aerial vehicle flies from high to low. When $\dfrac{H(n)-H(n-1)}{t} > -v_{\max}$ is not tenable, it is necessary to adjust the second interpolation height. $H(n) = H(n-1)-v_{\max}*t$ may be obtained by assuming $\dfrac{H(n)-H(n-1)}{t} = -v_{\max}$. That is, the second interpolation height is adjusted as $H(n) = H(n-1)-v_{\max}*t$, where H(n) denotes the second interpolation height, H(n-1) denotes the first interpolation height, $v_{\max}$ denotes the maximum vertical velocity, and t denotes the flight time.

If the first interpolation height is less than the second interpolation height, it is indicated that the unmanned aerial vehicle flies from low to high. When $\dfrac{H(n)-H(n-1)}{t} < v_{\max}$ is not tenable, it is necessary to adjust the first interpolation height. $H(n-1) = H(n)-v_{\max}*t$ may be obtained by assuming $\dfrac{H(n)-H(n-1)}{t} = v_{\max}$. That is, the first interpolation height is adjusted as $H(n-1) = H(n)-v_{\max}*t$.

Sub-step S1036: determining whether the next interposition point is the last interpolation point in the initial height table.

In this embodiment, if the next interpolation point is not the last interpolation point in the initial height table, Sub-step S1037 will be executed; and, if the next interpolation point is the last interpolation point in the initial height table, Sub-step S1038 will be executed.

Sub-step S1037: replacing the first interpolation point with the next interpolation point, and executing Sub-step S1032 until the next interpolation point is the last interpolation point in the initial height table.

Sub-step S1038: determining whether the vertical velocity of the unmanned aerial vehicle for flight between any two adjacent interpolation points among the plurality of interpolation points after a height adjustment is less than the maximum vertical velocity.

In this embodiment, since the interpolation heights of two adjacent interpolation points in the initial height table are successively adjusted from the first interpolation point, the following situation may occur during a previous round of adjustment: it is assumed that the height difference between the interpolation point 4 and the interpolation point 5 of (a) in FIG. 3 satisfies a condition, so the two interpolation points are not adjusted in height; and, the height difference between the interpolation point 5 and the interpolation point 6 does not satisfy the condition, the interpolation height of the interpolation point 5 is increased. As shown in (b) of FIG. 3, the height difference between the interpolation point 5 and the interpolation point 6 after adjustment satisfies the condition, but the height difference between the interpolation point 4 and the interpolation point 5 does not satisfy a condition. Therefore, multiple rounds of adjustment need to be performed, so that the height difference between any two adjacent interpolation points may satisfy the condition, that is, the vertical velocity of the unmanned aerial vehicle for flight between any two adjacent interpolation points is less than the maximum vertical velocity.

In this embodiment, if the vertical velocity of the unmanned aerial vehicle for flight between any two adjacent interpolation points among the plurality of interpolation points after the height adjustment is greater than or equal to the maximum vertical velocity, Sub-step S1032 will be executed until the vertical velocity of the unmanned aerial vehicle for flight between any two adjacent interpolation points among the plurality of interpolation points after the height adjustment is less than the maximum vertical velocity, to obtain a reference height table; and, if the vertical velocity of the unmanned aerial vehicle for flight between any two adjacent interpolation points among the plurality of interpolation points after the height adjustment is less than the maximum vertical velocity, Sub-step S1039 will be executed, that is, a reference height table is obtained.

Sub-step S1039: obtaining a reference height table.

In this embodiment, after the interpolation heights of the interpolation points in the initial height table are adjusted according to the maximum vertical velocity to obtain a reference height table, as shown in (c) of FIG. 3, the vertical velocity of the unmanned aerial vehicle for flight between any two adjacent interpolation points is less than the maximum vertical velocity, that is, the vertical velocity satisfies the flight performance requirements of the unmanned aerial vehicle. However, since the unmanned aerial vehicle also needs to accelerate or decelerate frequently, that is, the vertical acceleration does not satisfy the flight performance requirements of the unmanned aerial vehicle, it is also necessary to adjust the reference heights in the reference height table according to the maximum vertical acceleration.

Step S104: adjusting the reference height of each of the plurality of interpolation points in the reference height table according to the maximum vertical acceleration so that a vertical acceleration of the unmanned aerial vehicle for flight between any three adjacent interpolation points is less than the maximum vertical acceleration, to obtain a target height table, the target height table including the plurality of interpolation points and a target height of each of the plurality of interpolation points.

In this embodiment, in order to make the vertical acceleration of the unmanned aerial vehicle during flight satisfy the flight performance requirements of the unmanned aerial vehicle, it is necessary to ensure that the vertical acceleration of the unmanned aerial vehicle for flight between any three adjacent interpolation points is less than the maximum vertical acceleration. Therefore, the reference heights of the interpolation points in the reference height table may be adjusted based on this principle. Meanwhile, in order to ensure the safe flight of the unmanned aerial vehicle, during the height adjustment, only lower heights may be increased, but larger heights may not be decreased.

In this embodiment, if it is assumed that there are N interpolation points in the reference height table, in order to avoid missing some interpolation points during the height adjustment process, the reference heights of three adjacent interpolation points in the reference height table may be successively adjusted from a first interpolation point. For example, the first interpolation point, a second interpolation point and a third interpolation point are adjusted firstly; then, the second interpolation point, the third interpolation point and a fourth interpolation point are adjusted; and, by that analogy, until the $(N-2)^{th}$ interpolation point, the $(N-1)^{th}$ interpolation point and the $N^{th}$ interpolation point are adjusted. After a first round of adjustment is completed, if there are still adjacent interpolation points that do not satisfy a condition in terms of height difference, a second round of adjustment will be performed until the height difference between any three adjacent interpolation points may satisfy the condition, that is, the vertical acceleration of the unmanned aerial vehicle for flight between any three adjacent interpolation points is less than the maximum vertical acceleration. Thus, a target height table including a plurality of interpolation points and a target height of each of the plurality of interpolation points is obtained.

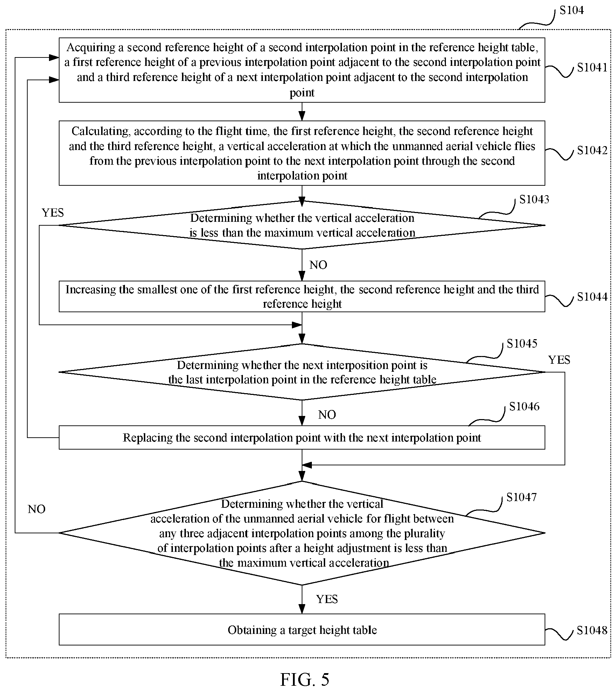

Based on FIG. 1, referring to FIG. 5, Step S104 may include the following steps.

Sub-step S1041: acquiring a second reference height of a second interpolation point in the reference height table, a first reference height of a previous interpolation point adjacent to the second interpolation point and a third reference height of a next interpolation point adjacent to the second interpolation point.

Sub-step S1042: calculating, according to the flight time, the first reference height, the second reference height and the third reference height, a vertical acceleration at which the unmanned aerial vehicle flies from the previous interpolation point to the next interpolation point through the second interpolation point.

In this embodiment, if it is assumed that the first reference height is $H_{n-1}$, the second reference height is $H_n$ and the second reference height is $H_{n+1}$, the vertical velocity at which the unmanned aerial vehicle flies from the previous interpolation point to the second interpolation point is $v_1 = \dfrac{H_n - H_{n-1}}{t}$, and the vertical velocity at which the unmanned aerial vehicle flies from the second interpolation point to the next interpolation point is $v_2 = \dfrac{H_{n+1} - H_n}{t}$, so that the vertical acceleration at which the unmanned aerial vehicle flies from the previous interpolation point to the next interpolation point through the second interpolation point is $\dfrac{v_2 - v_1}{t} = \dfrac{H(n+1) + H(n-1) - 2H(n)}{t^2}$.

Sub-step S1043: determining whether the vertical acceleration is less than the maximum vertical acceleration.

In this embodiment, if the vertical acceleration is greater than or equal to the maximum vertical acceleration, Sub-step S1044 will be executed; and, if the vertical acceleration is less than the maximum vertical acceleration, Sub-step S1045 will be executed. In other words, it is determined whether $\dfrac{H(n+1)+H(n-1)-2H(n)}{t^2} < a_{max}$ is not tenable.

If $\dfrac{H(n+1)+H(n-1)-2H(n)}{t^2} < a_{max}$ is not tenable, Sub-step S1044 will be executed; and, if $\dfrac{H(n+1)+H(n-1)-2H(n)}{t^2} < a_{max}$ is tenable, Sub-step S1045 will be executed.

Since acceleration is a vector, if it is assumed that the vertical upward direction is a positive direction, and when the unmanned aerial vehicle flies from high to low and then to high, the maximum vertical acceleration is a positive value, it is necessary to determine whether $\dfrac{H(n+1)+H(n-1)-2H(n)}{t^2} < a_{max}$ is tenable; and, when the unmanned aerial vehicle flies from low to high and then to low, the maximum vertical acceleration is a negative value, and it is necessary to determine whether $\dfrac{H(n+1)+H(n-1)-2H(n)}{t^2} > -a_{max}$ is tenable.

Sub-step S1044: increasing the smallest one of the first reference height, the second reference height and the third reference height.

In this embodiment, if the vertical acceleration is greater than or equal to the maximum vertical acceleration, it is indicated that the height difference between the first reference height, the second reference height and the third reference height is too large, and it is necessary to decrease the height difference between any three adjacent interpolation points. However, in order to ensure the safe flight of the unmanned aerial vehicle, the smallest one of the first reference height, the second reference height and the third reference height may be increased.

As an implementation, the way of increasing the smallest one of the first reference height, the second reference height and the third reference height may include the following steps.

If both the first reference height and the third reference height are greater than the second reference height, it is indicated that the unmanned aerial vehicle flies from high to low and then to high. When $\dfrac{H(n+1)+H(n-1)-2H(n)}{t^2} < a_{max}$ is not tenable, it is necessary to adjust the second reference height. $H_n = \dfrac{H_{n+1}+H_{n-1}-a_{max}*t^2}{2}$ may be obtained by assuming $\dfrac{H(n+1)+H(n-1)-2H(n)}{t^2} = a_{max}$. That is, the second reference height is adjusted as $H_n = \dfrac{H_{n+1}+H_{n-1}-a_{max}*t^2}{2}$, where $H_n$ denotes the second reference height, $H_{n-1}$ denotes the first reference height, $H_{n+1}$ denotes the third reference height, $a_{max}$ denotes the maximum vertical acceleration, and t denotes the flight time.

If the second reference height is greater than the first reference height and the third reference height and the third reference height is greater than the first reference height, it is indicated that the unmanned aerial vehicle flies from low to high and then to low. When $\dfrac{H(n+1)+H(n-1)-2H(n)}{t^2} > -a_{max}$ is not tenable, it is necessary to adjust the first reference height. $H_{n-1} = -a_{max}*t^2 + 2H_n - H_{n+1}$ may be obtained by assuming $\dfrac{H(n+1)+H(n-1)-2H(n)}{t^2} = -a_{max}$. That is, the first reference height is adjusted as $H_n = \dfrac{H_{n+1}+H_{n-1}-a_{max}*t^2}{2}$.

If the second reference height is greater than the first reference height and the third reference height and the third reference height is less than the first reference height, it is indicated that the unmanned aerial vehicle flies from

$$\frac{H(n+1)+H(n-1)-2H(n)}{t^2} > -a_{max}$$

low to high and then to low. When $\frac{H(n+1)+H(n-1)-2H(n)}{t^2} > -a_{max}$ is not tenable, it is necessary to adjust the third reference height. $H_{n+1} = -a_{max}*t^2 + 2H_n - H_{n-1}$ may be obtained by assuming

$$\frac{H(n+1)+H(n-1)-2H(n)}{t^2} = -a_{max}$$

. That is, the third reference height is adjusted as $H_{n+1} = -a_{max}*t^2 + 2H_n - H_{n-1}$.

Sub-step S1045: determining whether the next interposition point is the last interpolation point in the reference height table.

In this embodiment, if the next interpolation point is not the last interpolation point in the reference height table, Sub-step S1046 will be executed; and, if the next interpolation point is the last interpolation point in the reference height table, Sub-step S1047 will be executed.

Sub-step S1046: replacing the second interpolation point with the next interpolation point, and Sub-step S1041 is executed until the next interpolation point is the last interpolation point in the reference height table.

Sub-step S1047: determining whether the vertical acceleration of the unmanned aerial vehicle for flight between any three adjacent interpolation points among the plurality of interpolation points after a height adjustment is less than the maximum vertical acceleration.

In this embodiment, if the vertical acceleration of the unmanned aerial vehicle for flight between any three adjacent interpolation points among the plurality of interpolation points after the height adjustment is greater than or equal to the maximum vertical acceleration, Sub-step S1041 will be executed until the vertical acceleration of the unmanned aerial vehicle for flight between any three adjacent interpolation points among the plurality of interpolation points after the height adjustment is less than the maximum vertical acceleration, to obtain a target height table; and, if the vertical acceleration of the unmanned aerial vehicle for flight between any three adjacent interpolation points among the plurality of interpolation points after the height adjustment is less than the maximum vertical acceleration, Sub-step S1048 will be executed, that is, a target height table is obtained, as shown in (d) of FIG. 3.

Sub-step S1048: obtaining a target height table.

In this embodiment, after the initial height table is optimized by using the maximum vertical velocity and the maximum vertical acceleration of the unmanned aerial vehicle in the height direction to obtain a target height table including a plurality of interpolation points and the target height of each interpolation point, if an electronic device (e.g., a terminal, a server, a ground workstation, etc.) is communicatively connected to the unmanned aerial vehicle, the operating route and the target height table corresponding to the operating route may be transmitted to the unmanned aerial vehicle. After the unmanned aerial vehicle starts operation, during flight, a flight controller of the unmanned aerial vehicle inquires, according to the route segment number of a current operating route segment and a distance to the route segment starting waypoint and from the target height table, a target height of the corresponding interpolation point, and uses the target height as the current flight height for flying.

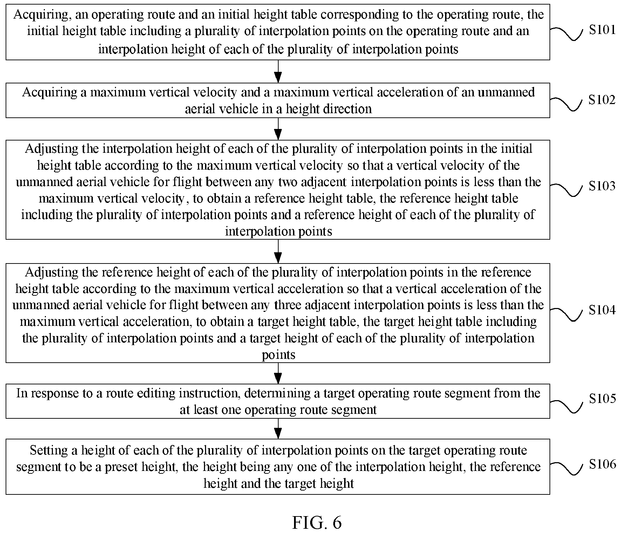

In one possible situation, an user may edit the heights of some operating route segments because some operating route segments may not be operating areas, for example, water surface, etc., and frequently adjusting the heights of these operating route segments will gratuitously lose energy reserves of the unmanned aerial vehicle. Therefore, based on FIG. 1, FIG. 6 shows another schematic flowchart diagram of the route altitude adjustment method according to an embodiment of the present application. Referring to FIG. 6, after Step S104, the route altitude adjustment method further includes the following steps.

Step S105: in response to a route editing instruction, determining a target operating route segment from the at least one operating route segment.

In this embodiment, the target operating route segment is an operating route segment, which is selected from the operating route by the user and the height of which is to be edited. The route editing operation may be an operation of clicking the target operating route segment by the user, or may be an operation of inputting the route segment number of the target operating route segment by the user. For example, with reference to (b) in FIG. 2, if the user clicks the leftmost operating route segment or inputs a, the target operating route segment a may be determined.

Step S106: setting a height of each of the plurality of interpolation points on the target operating route segment to be a preset height, the height being any one of the interpolation height, the reference height and the target height.

In this embodiment, the preset height is the smallest height value of the target operating route segment input after the user selects the target operating route segment. For example, with reference to (b) in FIG. 2, the target operating route segment a corresponds to a water surface, and it is unnecessary to frequently perform height adjustment, so that the height of each interpolation point on the target operating route segment a is set as the preset height, where the preset height is a sum of a topographical height of the water surface and a set distance to the water surface. For example, referring to (e) in FIG. 3, after the user performs an editing operation, the heights of the interpolation points 2, 3, 4 and 5 of (e) in FIG. 3 are set as the preset height.

In addition, the user's operation of editing the operating route segment may be an operation of editing any one of the interpolation height, the reference height and the target height. If the height is the interpolation height, Steps S105 to S106 are executed after Step S101 in FIG. 1; if the height is the reference height, Steps S105 to S106 are executed after Step S103 in FIG. 1; and, if the height is the target height, Steps S105 to S106 are executed after Step S104 in FIG. 1.

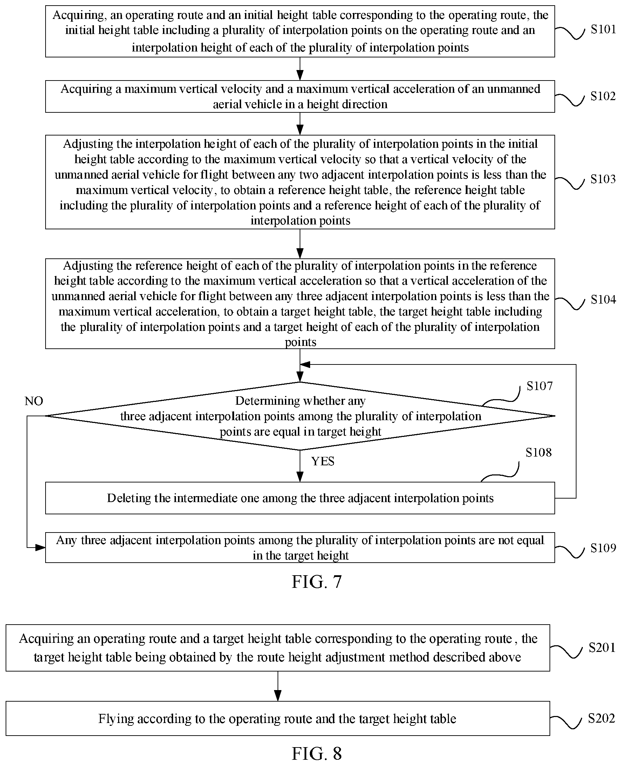

In one possible situation, some continuous interpolation points on the operating route segment have the same interpolation height. For these interpolation points, it is unnecessary for the flight controller of the unmanned aerial vehicle to frequently inquire the target height to determine the current flight height. Therefore, based on FIG. 1, FIG. 7 shows another schematic flowchart diagram of the route altitude adjustment method according to an embodiment of the present application. Referring to FIG. 7, after Step S104, the route altitude adjustment method further includes the following steps.

Step S107: determining whether any three adjacent interpolation points among the plurality of interpolation points are equal in target height.

In this embodiment, if any three adjacent interpolation points among the plurality of interpolation points are equal in target height, Step S108 will be executed; and, if any three adjacent interpolation points among the plurality of interpolation points are not equal in target height, Step S109 will be executed.

Step S108: deleting the intermediate one among the three adjacent interpolation points, and repeating Step S103 until any three adjacent interpolation points among the plurality of interpolation points are not equal in the target height.

For example, with reference to (e) in FIG. 3, if the interpolation points 2, 3, 4 and 5 are equal in target height, the interpolation points 3 and 4 are deleted, as shown in (f) of FIG. 3.

Step S109: any three adjacent interpolation points among the plurality of interpolation points are not equal in the target height.

It is to be noted that, Steps S107 to S109 may also be executed after Step S106 in the route altitude adjustment method shown in FIG. 6.

Referring to FIG. 8, FIG. 8 shows a schematic flowchart diagram of an unmanned aerial vehicle operation method according to an embodiment of the present application. The unmanned aerial vehicle operation method is applied to electronic devices which may be unmanned aerial vehicles. The unmanned aerial vehicle operation method includes the following steps.

Step S201: acquiring an operating route and a target height table corresponding to the operating route, the target height table being obtained by the route altitude adjustment method described above.

In this embodiment, if an electronic device that executes the route altitude adjustment method is a terminal, a server, a ground workstation, etc., the operating route and the target height table corresponding to the operating route may be transmitted to the unmanned aerial vehicle by the terminal, the server, the ground workstation, etc.; and, if the electronic device that executes the route altitude adjustment method is an unmanned aerial vehicle, the operating route and the target height table corresponding to the operating route may be acquired from a memory of the unmanned aerial vehicle.

Step S202: flying according to the operating route and the target height table.

In this embodiment, after the unmanned aerial vehicle acquires the operating route and the target height table corresponding to the operating route, during flight, a flight controller of the unmanned aerial vehicle inquires, according to the route segment number of a current operating route segment and a distance to the route segment starting waypoint and from the target height table, a target height of the corresponding interpolation point, and uses the target height as the current flight height for flying.

Compared with the prior art, embodiments of the present application have the following beneficial effects.

Firstly, an initial height table is optimized by using the maximum vertical velocity and the maximum vertical acceleration of an unmanned aerial vehicle in a height direction to obtain a target height table including a plurality of interpolation points and a target height of each of the plurality of interpolation point, so that a vertical velocity for flight between any two adjacent interpolation points is less than the maximum vertical velocity and a vertical acceleration for flight between any three adjacent interpolation points is less than the maximum vertical acceleration, when the unmanned aerial vehicle flies according to the operating route and the target height table. In otherwords, the unmanned aerial vehicle may always satisfy the flight performance requirements during flight.

Secondly, during the height adjustment, only smaller heights may be increased, but larger heights may not be decreased, avoiding the unmanned aerial vehicle from hitting against higher crops and ensuring safe flight of the unmanned aerial vehicle.

Thirdly, a function of editing the operating route segment by an user is provided, thereby avoiding the unmanned aerial vehicle from frequently adjusting the heights in some route segments that may not be operating areas, and saving the energy reserves of the unmanned aerial vehicle.

Fourthly, a plurality of continuous interpolation points having the same interpolation height on the operating route segment are compressed, thereby avoiding the flight controller of the unmanned aerial vehicle from frequently inquiring the target height to determine the current flight height and improving the operation efficiency.

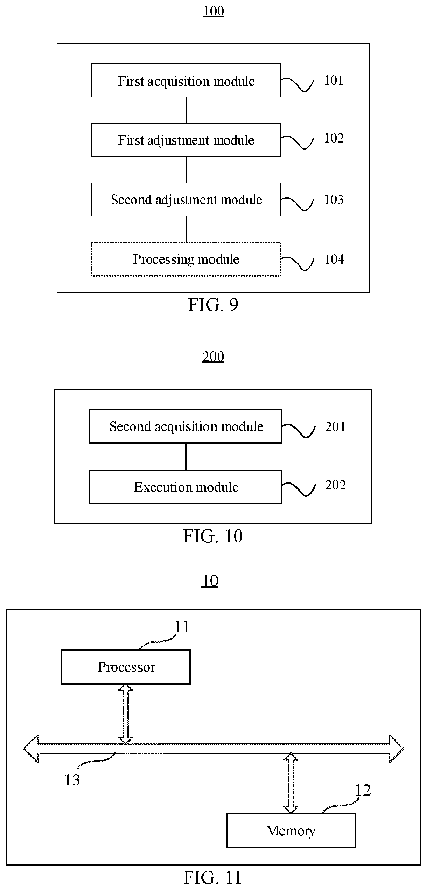

In order to execute the corresponding steps in the above embodiments and various possible implementations of the route altitude adjustment method, an implementation of a route altitude adjustment apparatus will be given below. Referring to FIG. 9, FIG. 9 shows a schematic block diagram of a route altitude adjustment apparatus 100 according to an embodiment of the present application. The route altitude adjustment apparatus 100 is applied to electronic devices. The electronic devices may be terminals, servers, ground workstations, unmanned aerial vehicles, etc., and the terminals may be smart phones, tablet computers, portable notebook computers, desktop computers, etc. The route altitude adjustment apparatus 100 includes: a first acquisition module 101, a first adjustment module 102 and a second adjustment module 103.

The first acquisition module 101 is configured to acquire an operating route and an initial height table corresponding to the operating route, the initial height table including a plurality of interpolation points on the operating route and an interpolation height of each of the plurality of interpolation points.

Optionally, the way of acquiring, by the first acquisition module 101, an initial height table corresponding to the operating route includes: determining the plurality of interpolation points on the operating route by an equidistant interpolation; inquiring, in a three-dimensional map, a topographical height of the highest point in a circle using a current interpolation point as a center and having a preset radius, and using the topographical height of the highest point as an interpolation height of the current interpolation point; and, traversing each of the plurality of interpolation points to obtain the interpolation height of each of the plurality of interpolation points.

The first acquisition module 101 is further configured to acquire the maximum vertical velocity and the maximum vertical acceleration of an unmanned aerial vehicle in a height direction

The first adjustment module 102 is configured to adjust the interpolation height of each of the plurality of interpolation points in the initial height table according to the maximum vertical velocity so that a vertical velocity of the unmanned aerial vehicle for flight between any two adjacent interpolation points is less than the maximum vertical velocity, to obtain a reference height table, the reference height table including the plurality of interpolation points and a reference height of each of the plurality of interpolation points.

Optionally, the first adjustment module 102 is specifically configured to: acquire the maximum horizontal velocity of the unmanned aerial vehicle when flying according to the operating route; calculate, according to the maximum horizontal velocity and a preset interpolation distance between two adjacent interpolation points, a flight time of the unmanned aerial vehicle for flying the preset interpolation distance at the maximum horizontal velocity; acquire a first interpolation height of a first interpolation point in the initial height table and a second interpolation height of a next interpolation point adjacent to the first interpolation point; calculate, according to the flight time, the first interpolation height and the second interpolation height, a vertical velocity at which the unmanned aerial vehicle flies from the first interpolation point to the next interpolation point within the flight time; increase the smallest one of the first interpolation height and the second interpolation height if the vertical velocity is greater than or equal to the maximum vertical velocity; determine whether the next interposition point is the last interpolation point in the initial height table; if the next interposition point is not the last interpolation point in the initial height table, replace the first interpolation point with the next interpolation point, and execute the step of acquiring a first interpolation height of a first interpolation point in the initial height table and a second interpolation height of a next interpolation point adjacent to the first interpolation point until the next interposition point is the last interpolation point in the initial height table; determine whether the vertical velocity of the unmanned aerial vehicle for flight between any two adjacent interpolation points among the plurality of interpolation points after a height adjustment is less than the maximum vertical velocity; and, if the vertical velocity of the unmanned aerial vehicle for flight between any two adjacent interpolation points among the plurality of interpolation points after the height adjustment is greater than or equal to the maximum vertical velocity, execute the step of acquiring a first interpolation height of a first interpolation point in the initial height table and a second interpolation height of a next interpolation point adjacent to the first interpolation point until the vertical velocity of the unmanned aerial vehicle for flight between any two adjacent interpolation points among the plurality of interpolation points after the height adjustment is less than the maximum vertical velocity, to obtain the reference height table.

Optionally, the way of increasing, by the first adjustment module 102, the smallest one of the first interpolation height and the second interpolation height includes: if the first interpolation height is greater than the second interpolation height, adjusting the second interpolation height as $H(n) = H(n\text{-}1)\text{-}v_{max}{}^{*}t$, where H(n) denotes the second interpolation height, H(n-1) denotes the first interpolation height, $v_{max}$ denotes the maximum vertical velocity, and t denotes the flight time; and, if the first interpolation height is less than the second interpolation height, adjusting the first interpolation height as $H(n\text{-}1) = H(n)\text{-}v_{max}{}^{*}t$.

The second adjustment module 103 is configured to adjust the reference height of each of the plurality of interpolation points in the reference height table according to the maximum vertical acceleration so that a vertical acceleration of the unmanned aerial vehicle for flight between any three adjacent interpolation points is less than the maximum vertical acceleration, to obtain a target height table, the target height table including the plurality of interpolation points and a target height of each of the plurality of interpolation points.

Optionally, the second adjustment module 103 is specifically configured to: acquire a second reference height of a second interpolation point in the reference height table, a first reference height of a previous interpolation point adjacent to the second interpolation point, and a third reference height of a next interpolation point adjacent to the second interpolation point; calculate, according to the flight time, the first reference height, the second reference height and the third reference height, a vertical acceleration at which the unmanned aerial vehicle flies from the previous interpolation point to the next interpolation point through the second interpolation point; determine whether the vertical acceleration is less than the maximum vertical acceleration; increase the smallest one of the first reference height, the second reference height and the third reference height if the vertical acceleration is greater than or equal to the maximum vertical acceleration; determine whether the next interposition point is the last interpolation point in the reference height table; if the next interposition point is not the last interpolation point in the reference height table, replace the second interpolation point with the next interpolation point and execute the above step until the next interpolation point is the last interpolation point in the reference height table; determine whether the vertical acceleration of the unmanned aerial vehicle for flight between any three adjacent interpolation points among the plurality of interpolation points after a height adjustment is less than the maximum vertical acceleration; and, if the vertical acceleration of the unmanned aerial vehicle for flight between any three adjacent interpolation points among the plurality of interpolation points after the height adjustment is greater than or equal to the maximum vertical acceleration, repeat the above steps until the vertical acceleration of the unmanned aerial vehicle for flight between any three adjacent interpolation points among the plurality of interpolation points after the height adjustment is less than the maximum vertical acceleration, to obtain the target height table.

Optionally, the way of increasing, by the second adjustment module 103, the smallest one of the first reference height, the second reference height and the third reference height includes: if both the first reference height and the third reference height are greater than the second reference height, adjusting the second reference height as

$$H_n = \frac{H_{n+1} + H_{n-1} - a_{\max} * t^2}{2}$$

, where $H_n$ denotes the second reference height, $H_{n-1}$ denotes the first reference height, $H_{n+1}$ denotes the third reference height, $a_{\max}$ denotes the maximum vertical acceleration, and t denotes the flight time; if the second reference height is greater than the first reference height and the third reference height and the third reference height is greater than the first reference height, adjusting the first reference height as $H_{n-1} = -a_{\max} * t^2 + 2H_n - H_{n+1}$; and, if the second reference height is greater than the first reference height and the third reference height and the third reference height is less than the first reference height, adjusting the third reference height as $H_{n+1} = -a_{\max} * t^2 + 2H_n - H_{n-1}$.

Optionally, the operating route includes at least one operating route segment, and the route altitude adjustment apparatus 100 further includes a processing module 104. The processing module 104 is configured to: in response to a route editing instruction, determine a target operating route segment from the at least one operating route segment; and set a height of each of the plurality of interpolation points on the target operating route segment to be a preset height, the height being any one of the interpolation height, the reference height and the target height.

Optionally, the processing module 104 is further configured to: determine whether any three adjacent interpolation points among the plurality of interpolation points are equal in the target height; delete the middle one among the three adjacent interpolation points if any three adjacent interpolation points among the plurality of interpolation points are equal in the target height; and, repeat the above steps until any three adjacent interpolation points among the plurality of interpolation points are not equal in the target height.

In order to execute the corresponding steps in the above embodiments and various possible implementations of the unmanned aerial vehicle operation method, an implementation of an unmanned aerial vehicle operation apparatus will be given below. Referring to FIG. 10, FIG. 10 shows a schematic block diagram of an apparatus 200 for operating an unmanned aerial vehicle according to an embodiment of the present application. The apparatus 200 for operating an unmanned aerial vehicle is applied to electronic devices which may be unmanned aerial vehicles. The apparatus 200 for operating an unmanned aerial vehicle includes a second acquisition module 201 and an execution module 202.

The second acquisition module 201 is configured to acquire an operating route and a target height table corresponding to the operating route, the target height table being obtained by the route altitude adjustment method described above.

The execution module 202 is configured to fly according to the operating route and the target height table.

It should be clearly understood by those skilled in the art that, for the convenience and conciseness of description, specific operation processes of the route altitude adjustment apparatus 100 and the apparatus 200 for operating an unmanned aerial vehicle described above may refer to the corresponding processes in the above method embodiments and will not be repeated here.

Referring to FIG. 11, FIG. 11 shows a schematic block diagram of an electronic device 10 according to an embodiment of the present application. The electronic device 10 includes a processor 11, a memory 12 and a bus 13. The processor 11 is connected to the memory 12 via the bus 13.

The memory 12 is configured to store programs, for example, the route altitude adjustment apparatus 100 shown in FIG. 9, or the apparatus 200 for operating an unmanned aerial vehicle shown in FIG. 10, or the route altitude adjustment apparatus 100 shown in FIG. 9 and the apparatus 200 for operating an unmanned aerial vehicle shown in FIG. 10. Each of the route altitude adjustment apparatus 100 and the apparatus 200 for operating an unmanned aerial vehicle includes at least one software functional module that may be stored in the memory 12 in a form of software or firmware or solidified in an operating system (OS) of the electronic device 10. Upon receiving an execution instruction, the processor 11 executes the programs to implement the route altitude adjustment method or the unmanned aerial vehicle operation method disclosed in the above embodiments.

The memory 12 may include a random access memory (RAM), or may include a non-volatile memory (NVM).

The processor 11 may be an integrated circuit chip having a signal processing capability. During a process of implementation, the steps in the above methods may be completed by an integrated logic circuit of hardware in the processor 11 or by instructions in a form of software. The processor 11 may be a general-purpose processor, including a central processing unit (CPU), a microcontroller unit (MCU), a complex programmable logic device (CPLD), a field-programmable gate array (FPGA), an embedded ARM or other chips.

An embodiment of the present application further provides a non-transitory computer-readable storage medium, storing computer programs. When the computer programs are executed by the processor 11, the processor 11 is enabled to implement the route altitude adjustment method, or the unmanned aerial vehicle operation method, or the route altitude adjustment method and the unmanned aerial vehicle operation method disclosed in the above embodiments.

In conclusion, the present application provides a route altitude adjustment method, an unmanned aerial vehicle operation method, and a related apparatus. The route altitude adjustment method includes steps of: acquiring an operating route and an initial height table corresponding to the operating route, the initial height table including a plurality of interpolation points on the operating route and an interpolation height of each of the plurality of interpolation points; acquiring a maximum vertical velocity and a maximum vertical acceleration of an unmanned aerial vehicle in a height direction; adjusting the interpolation height of each of the plurality of interpolation points in the initial height table according to the maximum vertical velocity so that a vertical velocity of the unmanned aerial vehicle for flight between any two adjacent interpolation points is less than the maximum vertical velocity, to obtain a reference height table, the reference height table including the plurality of interpolation points and a reference height of each of the plurality of interpolation points; and, adjusting the reference height of each of the plurality of interpolation points in the reference height table according to the maximum vertical acceleration so that a vertical acceleration of the unmanned aerial vehicle for flight between any three adjacent interpolation points is less than the maximum vertical acceleration, to obtain a target height table, the target height table including the plurality of interpolation points and a target height of each of the plurality of interpolation points. The unmanned aerial vehicle operation method includes steps of: acquiring an operating route and a target height table corresponding to the operating route, the target height table being obtained by the route altitude adjustment method described above; and, flying according to the operating route and the target height table. In the present application, the initial height table is optimized by using the maximum vertical velocity and the maximum vertical acceleration of an unmanned aerial vehicle in a height direction to obtain a target height table including a plurality of interpolation points and a target height of each of the plurality of interpolation point, so that a vertical velocity for flight between any two adjacent interpolation points is less than the maximum vertical velocity and a vertical acceleration for flight between any three adjacent interpolation points is less than the maximum vertical acceleration, when the unmanned aerial vehicle flies according to the operating route and the target height table. In otherwords, the unmanned aerial vehicle may always satisfy the flight performance requirements during flight.

In several embodiments provided in the present application, it should be understood that the disclosed apparatuses and methods may be implemented in other ways. The apparatus embodiments described above are merely schematic. For example, the flowcharts and block diagrams in the accompanying drawings shows architectures, functions and operations of possible implementations of the apparatuses, methods and computer program products according to various embodiments of the present application. In this regard, each block in the flowcharts or block diagrams may represent a module, a program segment or a part of a code, which includes one or more executable instructions for implementing the specified logical function. It is also to be noted that, in some alternative implementations, the functions marked in the blocks may also occur in an order different from the order marked in the accompanying drawings. For example, two successive blocks may be actually executed substantially concurrently, or may be sometimes executed in a reverse order, depending upon the functions involved. It is also to be noted that, each block in the block diagrams/or flowcharts and the combinations of blocks in the block diagrams/or flowcharts may be implemented by dedicated hardware-based systems for executing specified functions or acts, or may be implemented by combinations of dedicated hardware and computer instructions.

In addition, the functional modules in the embodiments of the present application may be integrated to form an independent part. Each module may exist alone, or two or more modules may be integrated to from an independent part.

If the function is implemented in a form of a software functional module and sold or used as an independent product, the function may also be stored in a non-transitory computer-readable storage medium. Based on this understanding, the technical solutions of the present application may be essentially embodied in a form of software products, or some of the technical solutions that contribute to the prior art or parts of the technical solutions may be embodied in the form of software products. The computer software products are stored in a storage medium, and include a number of instructions for enabling a computer device (which may be a personal computer, a server, a network device or the like) to execute all or some of the steps in the methods according to various embodiments of the present application. The above-mentioned storage medium includes: U disks, mobile hard disks, ROMs (read-only memories), RAMs (random access memories), magnetic disks, optical disks, or various mediums that may store program codes. It is to be noted that, herein, the relational terms such as first and second are only used to distinguish one entity or operation from another entity or operation, and do not necessarily require or imply any such actual relationship or order between these entities or operations. Moreover, the terms "comprise/comprising", "include/including" or any other variants thereof are intended to cover a non-exclusive inclusion, so that a process, method, object or device including a series of elements not only includes these elements, but also includes other elements not listed explicitly, or further includes elements inherent to this process, method, object or device. Without more restrictions, the element defined by the statement "comprising an/a..." does not exclude other identical elements in the process, method, object or device including this element.

The foregoing description merely shows the specific implementations of the present application, and the protection scope of the present application is not limited thereto. Any person of ordinary skill in the art may readily conceive of variations or replacements within the technical scope disclosed by the present application, and these variations or replacements shall fall into the protection scope of the present application. Accordingly, the protection scope of the present application shall be subject to the protection scope defined by the claims.

INDUSTRIAL APPLICABILITY

According to the route height adjustment method, the method for operating an unmanned aerial vehicle and the related apparatuses provided by the present application, it can be ensured that the unmanned aerial vehicle can always satisfy the flight performance requirements during flight.

**Claims**

1. A route altitude adjustment method, comprising:

   acquiring an operating route and an initial height table corresponding to the operating route, the initial height table comprising a plurality of interpolation points on the operating route and an interpolation height of each of the plurality of interpolation points;
   acquiring a maximum vertical velocity and a maximum vertical acceleration of an unmanned aerial vehicle in a height direction;
   adjusting the interpolation height of each of the plurality of interpolation points in the initial height table according to the maximum vertical velocity so that a vertical velocity of the unmanned aerial vehicle for flight between any two adjacent interpolation points is less than the maximum vertical velocity, to obtain a reference height table, the reference height table comprising the plurality of interpolation points and a reference height of each of the plurality of interpolation points; and
   adjusting the reference height of each of the plurality of interpolation points in the reference height table according to the maximum vertical acceleration so that a vertical acceleration of the unmanned aerial vehicle for flight between any three adjacent interpolation points is less than the maximum vertical acceleration, to obtain a target height table, the target height table comprising the plurality of interpolation points and a target height of each of the plurality of interpolation points.

2. The method according to claim 1, wherein the step of adjusting the interpolation height of each of the plurality of interpolation points in the initial height table according to the maximum vertical velocity so that a vertical velocity of the unmanned aerial vehicle for flight between any two adjacent interpolation points is less than the maximum vertical velocity, to obtain a reference height table comprises:

   acquiring a maximum horizontal velocity of the unmanned aerial vehicle when flying according to the operating route;
   calculating, according to the maximum horizontal velocity and a preset interpolation distance between two adjacent interpolation points, a flight time of the unmanned aerial vehicle for flying the preset interpolation distance at the maximum horizontal velocity;
   acquiring a first interpolation height of a first interpolation point in the initial height table and a second interpolation height of a next interpolation point adjacent to the first interpolation point;

calculating, according to the flight time, the first interpolation height and the second interpolation height, a vertical velocity at which the unmanned aerial vehicle flies from the first interpolation point to the next interpolation point within the flight time;

determining whether the vertical velocity is less than the maximum vertical velocity;

increasing the smallest one of the first interpolation height and the second interpolation height if the vertical velocity is greater than or equal to the maximum vertical velocity;

determining whether the next interpolation point is the last interpolation point in the initial height table;

if the next interpolation point is not the last interpolation point in the initial height table, replacing the first interpolation point with the next interpolation point, and executing the step of acquiring a first interpolation height of a first interpolation point in the initial height table and a second interpolation height of a next interpolation point adjacent to the first interpolation point until the next interpolation point is the last interpolation point in the initial height table;

determining whether the vertical velocity of the unmanned aerial vehicle for flight between any two adjacent interpolation points among the plurality of interpolation points after the height adjustment is less than the maximum vertical velocity; and

if the vertical velocity of the unmanned aerial vehicle for flight between any two adjacent interpolation points among the plurality of interpolation points after the height adjustment is greater than or equal to the maximum vertical velocity, executing the step of acquiring a first interpolation height of a first interpolation point in the initial height table and a second interpolation height of a next interpolation point adjacent to the first interpolation point until the vertical velocity of the unmanned aerial vehicle for flight between any two adjacent interpolation points among the plurality of interpolation points after the height adjustment is less than the maximum vertical velocity, to obtain the reference height table.

3. The method according to claim 2, wherein the step of increasing the smallest one of the first interpolation height and the second interpolation height comprises:

if the first interpolation height is greater than the second interpolation height, adjusting the second interpolation height as $H(n) = H(n\text{-}1)\text{-}v_{max}{}^*t$, wherein H(n) denotes the second interpolation height, H(n-1) denotes the first interpolation height, $v_{max}$ denotes the maximum vertical velocity, and t denotes the flight time; and

if the first interpolation height is less than the second interpolation height, adjusting the first interpolation height as $H(n\text{-}1) = H(n)\text{-}v_{max}{}^*t$.

4. The method according to claim 2, wherein the step of adjusting the reference height of each of the plurality of interpolation points in the reference height table according to the maximum vertical acceleration so that a vertical acceleration of the unmanned aerial vehicle for flight between any three adjacent interpolation points is less than the maximum vertical acceleration, to obtain a target height table, the target height table comprising the plurality of interpolation points and a target height of each of the plurality of interpolation points comprises:

acquiring a second reference height of a second interpolation point in the reference height table, a first reference height of a previous interpolation point adjacent to the second interpolation point, and a third reference height of a next interpolation point adjacent to the second interpolation point;

calculating, according to the flight time, the first reference height, the second reference height and the third reference height, a vertical acceleration at which the unmanned aerial vehicle flies from the previous interpolation point to the next interpolation point through the second interpolation point;

determining whether the vertical acceleration is less than the maximum vertical acceleration;

increasing the smallest one of the first reference height, the second reference height and the third reference height if the vertical acceleration is greater than or equal to the maximum vertical acceleration;

determining whether the next interposition point is the last interpolation point in the reference height table;

if the next interposition point is not the last interpolation point in the reference height table, replacing the second interpolation point with the next interpolation point and executing the above step until the next interpolation point is the last interpolation point in the reference height table;

determining whether the vertical acceleration of the unmanned aerial vehicle for flight between any three adjacent interpolation points among the plurality of interpolation points after the height adjustment is less than the maximum vertical acceleration; and

if the vertical acceleration of the unmanned aerial vehicle for flight between any three adjacent interpolation points among the plurality of interpolation points after the height adjustment is greater than or equal to the maximum vertical acceleration, repeating the above steps until the vertical acceleration of the unmanned aerial vehicle for flight between any three adjacent interpolation points among the plurality of interpolation points after the height adjustment is less than the maximum vertical acceleration, to obtain the target height table.

5. The method according to claim 4, wherein the step of increasing the smallest one of the first reference height, the second reference height and the third reference height comprises:

if both the first reference height and the third reference height are greater than the second reference height, adjusting the second reference height as $H_n = \dfrac{H_{n+1} + H_{n-1} - a_{max}*t^2}{2}$ , wherein $H_n$ denotes the second reference height, $H_{n-1}$ denotes the first reference height, $H_{n+1}$ denotes the third reference height, $a_{max}$ denotes the maximum vertical acceleration, and t denotes the flight time;

if the second reference height is greater than the first reference height and the third reference height and the third reference height is greater than the first reference height, adjusting the first reference height as $H_{n-1} = -a_{max}*t^2 + 2H_n - H_{n+1}$ ; and

if the second reference height is greater than the first reference height and the third reference height and the third reference height is less than the first reference height, adjusting the third reference height as $H_{n+1} = -a_{max}*t^2 + 2H_n - H_{n-1}$.

6. The method according to claim 1, wherein the operating route comprises at least one operating route segment, and the method further comprises steps of:

in response to a route editing instruction, determining a target operating route segment from the at least one operating route segment; and

setting a height of each of the plurality of interpolation points on the target operating route segment to be a preset height, the height being any one of the interpolation height, the reference height and the target height.

7. The method according to claim 1 or 6, further comprising:

determining whether any three adjacent interpolation points among the plurality of interpolation points are equal in the target height;

deleting the intermediate one among the three adjacent interpolation points if any three adjacent interpolation points among the plurality of interpolation points are equal in the target height; and

repeating the above steps until any three adjacent interpolation points among the plurality of interpolation points are not equal in the target height.

8. The method according to claim 1, wherein the step of acquiring an initial height table corresponding to the operating route comprises:

determining the plurality of interpolation points on the operating route by an equidistant interpolation;

inquiring, in a three-dimensional map, a topographical height of the highest point in a circle using a current interpolation point as a center and having a preset radius, and using the topographical height of the highest point as an interpolation height of the current interpolation point; and

traversing each of the plurality of interpolation points to obtain the interpolation height of each of the plurality of interpolation points.

9. An unmanned aerial vehicle operation method, comprising:

acquiring an operating route and a target height table corresponding to the operating route, the target height table being obtained by the route altitude adjustment method according to any one of claims 1 to 8; and

flying according to the operating route and the target height table.

10. A route altitude adjustment apparatus, comprising:

a first acquisition module configured to acquire an operating route and an initial height table corresponding to the operating route, the initial height table comprising a plurality of interpolation points on the operating route and an interpolation height of each of the plurality of interpolation points;

the first acquisition module being further configured to acquire the maximum vertical velocity and the maximum vertical acceleration of an unmanned aerial vehicle in a height direction;

a first adjustment module configured to adjust the interpolation height of each of the plurality of interpolation points in the initial height table according to the maximum vertical velocity so that a vertical velocity of the unmanned aerial vehicle for flight between any two adjacent interpolation points is less than the maximum vertical velocity, to obtain a reference height table, the reference height table comprising the plurality of interpolation points and a reference height of each of the plurality of interpolation points; and

a second adjustment module configured to adjust the reference height of each of the plurality of interpolation points in the reference height table according to the maximum vertical acceleration so that a vertical acceleration of the unmanned aerial vehicle for flight between any three adjacent interpolation points is less than the maximum vertical acceleration, to obtain a target height table, the target height table comprising the plurality of interpolation points and a target height of each of the plurality of interpolation points.

11. The apparatus according to claim 10, wherein the first adjustment module is specifically configured to:

acquire the maximum horizontal velocity of the unmanned aerial vehicle when flying according to the operating route;

calculate, according to the maximum horizontal velocity and a preset interpolation distance between two adjacent interpolation points, a flight time of the unmanned aerial vehicle for flying the preset interpolation distance at the maximum horizontal velocity;

acquire a first interpolation height of a first interpolation point in the initial height table and a second interpolation height of a next interpolation point adjacent to the first interpolation point;

calculate, according to the flight time, the first interpolation height and the second interpolation height, a vertical velocity at which the unmanned aerial vehicle flies from the first interpolation point to the next interpolation point within the flight time;

determine whether the vertical velocity is less than the maximum vertical velocity;

increase the smallest one of the first interpolation height and the second interpolation height if the vertical velocity is greater than or equal to the maximum vertical velocity;

determine whether the next interposition point is the last interpolation point in the initial height table;

if the next interposition point is not the last interpolation point in the initial height table, replace the first interpolation point with the next interpolation point, and execute the step of acquiring a first interpolation height of a first interpolation point in the initial height table and a second interpolation height of a next interpolation point adjacent to the first interpolation point until the next interposition point is the last interpolation point in the initial height table;

determine whether the vertical velocity of the unmanned aerial vehicle for flight between any two adjacent interpolation points among the plurality of interpolation points after the height adjustment is less than the maximum vertical velocity; and

if the vertical velocity of the unmanned aerial vehicle for flight between any two adjacent interpolation points among the plurality of interpolation points after the height adjustment is greater than or equal to the maximum vertical velocity, execute the step of acquiring a first interpolation height of a first interpolation point in the initial height table and a second interpolation height of a next interpolation point adjacent to the first interpolation point until the vertical velocity of the unmanned aerial vehicle for flight between any two adjacent interpolation points among the plurality of interpolation points after the height adjustment is less than the maximum vertical velocity, to obtain the reference height table.

12. The apparatus according to claim 11, wherein the way of increasing, by the first adjustment module, the smallest one of the first interpolation height and the second interpolation height comprises:

if the first interpolation height is greater than the second interpolation height, adjusting the second interpolation height as $H(n) = H(n-1)-v_{max}*t$, wherein H(n) denotes the second interpolation height, H(n-1) denotes the first interpolation height, $v_{max}$ denotes the maximum vertical velocity, and t denotes the flight time; and

if the first interpolation height is less than the second interpolation height, adjusting the first interpolation height as $H(n-1) = H(n)-v_{max}*t$.

13. The apparatus according to claim 11, wherein the second adjustment module is specifically configured to:

acquire a second reference height of a second interpolation point in the reference height table, a first reference height of a previous interpolation point adjacent to the second interpolation point, and a third reference height of a next interpolation point adjacent to the second interpolation point;

calculate, according to the flight time, the first reference height, the second reference height and the third reference height, a vertical acceleration at which the unmanned aerial vehicle flies from the previous interpolation point to the next interpolation point through the second interpolation point;

determine whether the vertical acceleration is less than the maximum vertical acceleration;

increase the smallest one of the first reference height, the second reference height and the third reference height if the vertical acceleration is greater than or equal to the maximum vertical acceleration;

determine whether the next interposition point is the last interpolation point in the reference height table;

if the next interposition point is not the last interpolation point in the reference height table, replace the second interpolation point with the next interpolation point and execute the above step until the next interpolation point is the last interpolation point in the reference height table;

determine whether the vertical acceleration of the unmanned aerial vehicle for flight between any three adjacent interpolation points among the plurality of interpolation points after the height adjustment is less than the maximum vertical acceleration; and

if the vertical acceleration of the unmanned aerial vehicle for flight between any three adjacent interpolation points among the plurality of interpolation points after the height adjustment is greater than or equal to the maximum vertical acceleration, repeat the above steps until the vertical acceleration of the unmanned aerial vehicle for flight between any three adjacent interpolation points among the plurality of interpolation points after the height adjustment is less than the maximum vertical acceleration, to obtain the target height table.

14. The apparatus according to claim 13, wherein the way of increasing, by the second adjustment module, the smallest one of the first reference height, the second reference height and the third reference height comprises:

if both the first reference height and the third reference height are greater than the second reference height, adjusting the second reference height as $H_n = \dfrac{a_{max} * t^2 - H_{n+1} - H_{n-1}}{2}$ , wherein $H_n$ denotes the second reference height, $H_{n-1}$ denotes the first reference height, $H_{n+1}$ denotes the third reference height, $a_{max}$ denotes the maximum vertical acceleration, and t denotes the flight time;

if the second reference height is greater than the first reference height and the third reference height and the third reference height is greater than the first reference height, adjusting the first reference height as $H_{n-1} = -a_{max}*t^2 + 2H_n - H_{n+1}$ ; and

if the second reference height is greater than the first reference height and the third reference height and the third reference height is less than the first reference height, adjusting the third reference height as $H_{n+1} = -a_{max}*t^2 + 2H_n - H_{n-1}$.

15. The apparatus according to claim 10, wherein the operating route comprises at least one operating route segment, and the apparatus further comprises a processing module configured to:

in response to a route editing instruction, determine a target operating route segment from the at least one operating route segment; and

set a height of each of the plurality of interpolation point on the target operating route segment to be a preset height, the height being any one of the interpolation height, the reference height and the target height.

16. The apparatus according to claim 15, wherein the processing module is further configured to:

determine whether any three adjacent interpolation points among the plurality of interpolation points are equal in target height;

delete the intermediate one among the three adjacent interpolation points if any three adjacent interpolation points among the plurality of interpolation points are equal in the target height; and

repeat the above steps until any three adjacent interpolation points among the plurality of interpolation points are not equal in the target height.

17. The apparatus according to claim 10, wherein the way of acquiring, by the first acquisition module, an initial height table corresponding to the operating route comprises:

determining the plurality of interpolation points on the operating route by an equidistant interpolation;

inquiring, in a three-dimensional map, a topographical height of the highest point in a circle using a current interpolation point as a center and having a preset radius, and using the topographical height of the highest point as an interpolation height of the current interpolation point; and

traversing each of the plurality of interpolation points to obtain the interpolation height of each of the plurality of interpolation points.

18. An unmanned aerial vehicle operation apparatus, comprising:

a second acquisition module configured to acquire an operating route and a target height table corresponding to the operating route, the target height table being obtained by the route altitude adjustment method according to any one of claims 1 to 8; and

an execution module configured to fly according to the operating route and the target height table.

19. An electronic device, comprising:

one or more processors; and

a memory, configured to store one or more programs, wherein when the one or more programs are executed by the one or more processors, the one or more processors are enabled to implement the route altitude adjustment method according to any one of claims 1 to 8, and/or the unmanned aerial vehicle operation method according to claim 9.

20. A non-transitory computer-readable storage medium, storing computer programs, wherein when the computer programs are executed by a processor, the processor is enabled to implement the route altitude adjustment method according to any one of claims 1 to 8 and/or the unmanned aerial vehicle operation method according to claim 9.

| Acquiring, an operating route and an initial height table corresponding to the operating route, the initial height table including a plurality of interpolation points on the operating route and an interpolation height of each of the plurality of interpolation points | S101 |
|---|---|

| Acquiring a maximum vertical velocity and a maximum vertical acceleration of an unmanned aerial vehicle in a height direction | S102 |
|---|---|

| Adjusting the interpolation height of each of the plurality of interpolation points in the initial height table according to the maximum vertical velocity so that a vertical velocity of the unmanned aerial vehicle for flight between any two adjacent interpolation points is less than the maximum vertical velocity, to obtain a reference height table, the reference height table including the plurality of interpolation points and a reference height of each of the plurality of interpolation points | S103 |
|---|---|

| Adjusting the reference height of each of the plurality of interpolation points in the reference height table according to the maximum vertical acceleration so that a vertical acceleration of the unmanned aerial vehicle for flight between any three adjacent interpolation points is less than the maximum vertical acceleration, to obtain a target height table, the target height table including the plurality of interpolation points and a target height of each of the plurality of interpolation points | S104 |
|---|---|

FIG. 1

(a)                                        (b)

FIG. 2

FIG. 3

S103

Acquiring the maximum horizontal velocity of the unmanned aerial vehicle when flying according to the operating route — S1030

Calculating, according to a maximum horizontal velocity and a preset interpolation distance between two adjacent interpolation points, a flight time of the unmanned aerial vehicle for flying the preset interpolation distance at the maximum horizontal velocity — S1031

Acquiring a first interpolation height of a first interpolation point in the initial height table and a second interpolation height of a next interpolation point adjacent to the first interpolation point — S1032

Calculating, according to the flight time, the first interpolation height and the second interpolation height, a vertical velocity at which the unmanned aerial vehicle flies from the first interpolation point to the next interpolation point within the flight time — S1033

YES

Determining whether the vertical velocity is less than the maximum vertical velocity — S1034

NO

Increasing the smallest one of the first interpolation height and the second interpolation height — S1035

Determining whether the next interposition point is the last interpolation point in the initial height table — S1036

YES

NO

Replacing the first interpolation point with the next interpolation point — S1037

NO

Determining whether the vertical velocity of the unmanned aerial vehicle for flight between any two adjacent interpolation points among the plurality of interpolation points after a height adjustment is less than the maximum vertical velocity — S1038

YES

Obtaining a reference height table — S1039

FIG. 4

S104

Acquiring a second reference height of a second interpolation point in the reference height table, a first reference height of a previous interpolation point adjacent to the second interpolation point and a third reference height of a next interpolation point adjacent to the second interpolation point — S1041

Calculating, according to the flight time, the first reference height, the second reference height and the third reference height, a vertical acceleration at which the unmanned aerial vehicle flies from the previous interpolation point to the next interpolation point through the second interpolation point — S1042

YES

Determining whether the vertical acceleration is less than the maximum vertical acceleration — S1043

NO

Increasing the smallest one of the first reference height, the second reference height and the third reference height — S1044

Determining whether the next interposition point is the last interpolation point in the reference height table — S1045    YES

NO    S1046

Replacing the second interpolation point with the next interpolation point

NO

Determining whether the vertical acceleration of the unmanned aerial vehicle for flight between any three adjacent interpolation points among the plurality of interpolation points after a height adjustment is less than the maximum vertical acceleration — S1047

YES

Obtaining a target height table — S1048

FIG. 5

Acquiring, an operating route and an initial height table corresponding to the operating route, the initial height table including a plurality of interpolation points on the operating route and an interpolation height of each of the plurality of interpolation points ⟶ S101

Acquiring a maximum vertical velocity and a maximum vertical acceleration of an unmanned aerial vehicle in a height direction ⟶ S102

Adjusting the interpolation height of each of the plurality of interpolation points in the initial height table according to the maximum vertical velocity so that a vertical velocity of the unmanned aerial vehicle for flight between any two adjacent interpolation points is less than the maximum vertical velocity, to obtain a reference height table, the reference height table including the plurality of interpolation points and a reference height of each of the plurality of interpolation points ⟶ S103

Adjusting the reference height of each of the plurality of interpolation points in the reference height table according to the maximum vertical acceleration so that a vertical acceleration of the unmanned aerial vehicle for flight between any three adjacent interpolation points is less than the maximum vertical acceleration, to obtain a target height table, the target height table including the plurality of interpolation points and a target height of each of the plurality of interpolation points ⟶ S104

In response to a route editing instruction, determining a target operating route segment from the at least one operating route segment ⟶ S105

Setting a height of each of the plurality of interpolation points on the target operating route segment to be a preset height, the height being any one of the interpolation height, the reference height and the target height ⟶ S106

FIG. 6

Acquiring, an operating route and an initial height table corresponding to the operating route, the initial height table including a plurality of interpolation points on the operating route and an interpolation height of each of the plurality of interpolation points ⟶ S101

Acquiring a maximum vertical velocity and a maximum vertical acceleration of an unmanned aerial vehicle in a height direction ⟶ S102

Adjusting the interpolation height of each of the plurality of interpolation points in the initial height table according to the maximum vertical velocity so that a vertical velocity of the unmanned aerial vehicle for flight between any two adjacent interpolation points is less than the maximum vertical velocity, to obtain a reference height table, the reference height table including the plurality of interpolation points and a reference height of each of the plurality of interpolation points ⟶ S103

Adjusting the reference height of each of the plurality of interpolation points in the reference height table according to the maximum vertical acceleration so that a vertical acceleration of the unmanned aerial vehicle for flight between any three adjacent interpolation points is less than the maximum vertical acceleration, to obtain a target height table, the target height table including the plurality of interpolation points and a target height of each of the plurality of interpolation points ⟶ S104

NO ⟵ Determining whether any three adjacent interpolation points among the plurality of interpolation points are equal in target height ⟶ S107

YES

Deleting the intermediate one among the three adjacent interpolation points ⟶ S108

Any three adjacent interpolation points among the plurality of interpolation points are not equal in the target height ⟶ S109

**FIG. 7**

Acquiring an operating route and a target height table corresponding to the operating route, the target height table being obtained by the route height adjustment method described above ⟶ S201

Flying according to the operating route and the target height table ⟶ S202

**FIG. 8**

100

First acquisition module ⌇ 101

First adjustment module ⌇ 102

Second adjustment module ⌇ 103

Processing module ⌇ 104

FIG. 9

200

Second acquisition module ⌇ 201

Execution module ⌇ 202

FIG. 10

10

11

Processor

13

12

Memory

FIG. 11

## INTERNATIONAL SEARCH REPORT

| International application No. |
| --- |
| **PCT/CN2019/115158** |

| A. | CLASSIFICATION OF SUBJECT MATTER |
| --- | --- |
| | G05D 1/10(2006.01)i |

According to International Patent Classification (IPC) or to both national classification and IPC

| B. | FIELDS SEARCHED |
| --- | --- |

Minimum documentation searched (classification system followed by classification symbols)

G05D, B64C, G01C, G01S

Documentation searched other than minimum documentation to the extent that such documents are included in the fields searched

Electronic data base consulted during the international search (name of data base and, where practicable, search terms used)

VEN; CNABS; CNTXT: 无人机, 高度, 调, 植保, 喷洒, 插值, 速度, 加速度, 约束, 限制, 节点, 最大, 垂直, 竖直, z, 航迹, 路径, 轨迹, 路线, 线路, 轨道, 航道, aircraft, altitude, vertical, upright, acceleration, height, highness, rate, velocity, speed, limit, course, route

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109947136 A (TSINGHUA UNIVERSITY) 28 June 2019 (2019-06-28) description paragraphs 22-60, figures 1-3 | 1-20 |
| A | CN 104571127 A (NO.60 INST HEADQUARTERS GENERAL STAFF PLA) 29 April 2015 (2015-04-29) entire document | 1-20 |
| A | CN 106681344 A (HUNAN NANORADAR SCIENCE & TECHNOLOGY CO., LTD.) 17 May 2017 (2017-05-17) entire document | 1-20 |
| A | KR 20160068260 A (PUSAN NATIONAL UNIVERSITY INDUSTRY-UNIVERSITY COOPERATION FOUNDATION) 15 June 2016 (2016-06-15) entire document | 1-20 |
| A | US 4058710 A (DORNIER GMBH) 15 November 1977 (1977-11-15) entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 July 2020** | **06 August 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/115158**

| Patent document cited in search report | | | Publication date (day/month/year) | Patent family member(s) | | | Publication date (day/month/year) |
|---|---|---|---|---|---|---|---|
| CN | 109947136 | A | 28 June 2019 | None | | | |
| CN | 104571127 | A | 29 April 2015 | CN | 104571127 | B | 27 June 2017 |
| CN | 106681344 | A | 17 May 2017 | CN | 106681344 | B | 27 August 2019 |
| KR | 20160068260 | A | 15 June 2016 | None | | | |
| US | 4058710 | A | 15 November 1977 | DE | 2511233 | C2 | 10 March 1977 |
| | | | | GB | 1520173 | A | 02 August 1978 |
| | | | | DE | 2511233 | B1 | 22 July 1976 |
| | | | | FR | 2304117 | A1 | 08 October 1976 |
| | | | | FR | 2304117 | B1 | 31 July 1981 |

Form PCT/ISA/210 (patent family annex) (January 2015)